# EUROPEAN PATENT APPLICATION

(11) **EP 4 836 525 A1**
(43) Date of publication of application: **04.11.2026**
(21) Application number: 23963141.9
(22) Date of filing: 27.12.2023
(51) Int. Cl.: H04W 36/32, H04W 36/36, H04W 36/38

(54) **USER EQUIPMENT, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/047000
(87) International publication number: WO 2025/141792

(57) **Abstract**

A terminal according to an aspect of the present disclosure includes a transmission/reception unit that receives a trigger indication of a handover based on position information of the terminal or transmits a notification of triggering of the handover, and a control unit that controls an operation of the handover based on the trigger indication or the notification. According to one aspect of the present disclosure, suitable power control of a network can be performed, and more flexible communication can be performed.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, Rel. 20 or later), it has been studied that a terminal (user terminal, user equipment (UE)) performs cell-free communication that performs communication using a unit smaller than an existing cell.

However, specific studies on cell-free communication are not sufficient. In a case where this study is not sufficient, it is not possible to control the network (NW) according to the communication traffic or the like, and there is a possibility that improvement in the communication throughput is suppressed.

Therefore, an object of the present disclosure is to provide a terminal, a radio communication method, and a base station capable of performing suitable power control of a network and performing more flexible communication.

### Solution to Problem

A terminal according to an aspect of the present disclosure includes a transmission/reception unit that receives a trigger indication of a handover based on position information of the terminal or transmits a notification of triggering of the handover, and a control unit that controls an operation of the handover based on the trigger indication or the notification.

### Advantageous Effects of Invention

According to one aspect of the present disclosure, suitable power control of a network can be performed, and more flexible communication can be performed.

### Brief Description of Drawings

[FIG. 1] Figs. 1A and 1B are diagrams illustrating an outline of MIMO.
[FIG. 2] Fig. 2A is a diagram illustrating an outline of a cellular system. Fig. 2B is a diagram illustrating an outline of a cell-free system.
[FIG. 3] Figs. 3A to 3C are diagrams illustrating an example of an outline of each assumption of a cell-free configuration.
[FIG. 4] Fig. 4 is a diagram illustrating an example of a pattern of components (PCI components) of one PCI.
[FIG. 5] Figs. 5A to 5E are diagrams illustrating an example of a configuration of a first cell.
[FIG. 6] Fig. 6 is a diagram illustrating an example of a pattern of components (area components) of one area.
[FIG. 7] Fig. 7A is a diagram illustrating an example of a configuration of first/second cells according to option 1.1. Fig. 7B is a diagram illustrating an example of a configuration of the first/second cells according to option 1.2.
[FIG. 8] Fig. 8A is a diagram illustrating an example of a configuration of first/second cells according to option 2/4.1. Fig. 8B is a diagram illustrating an example of a configuration of first/second cells according to option 2/4.2.
[FIG. 9] Fig. 9A is a diagram illustrating an example of a configuration of first/second cells according to option 3/5.1. Fig. 9B is a diagram illustrating an example of a configuration of first/second cells according to option 3/5.2.
[FIG. 10] Fig. 10 is a diagram illustrating an example of a change of a configuration of a second cell.
[FIG. 11] Figs. 11A to 11C are diagrams illustrating an example of a configuration of a second cell according to option 0.3.
[FIG. 12] Fig. 12 is a diagram illustrating an example of a mobility scenario.
[FIG. 13] Figs. 13A to 13C are diagrams illustrating an example of RRC parameter configuration according to Embodiment 1-1.
[FIG. 14] Fig. 14 is a diagram illustrating an example of an indication by the MAC CE according to option 1-2-1.
[FIG. 15] Fig. 15 is a diagram illustrating an example of an indication by the MAC CE according to option 1-2-2.
[FIG. 16] Fig. 16 is a diagram illustrating an example of an indication by the MAC CE according to option 1-2-3.
[FIG. 17] Fig. 17 is a diagram illustrating an example of an indication by the MAC CE according to option 1-2-4.
[FIG. 18] Figs. 18A to 18C are diagrams illustrating an example of an indication field according to options 1-3-1/1-3-2/1-3-3.
[FIG. 19] Figs. 19A to 19F are diagrams illustrating an example of RRC parameter configuration according to option 2-1-2.
[FIG. 20] Figs. 20A and 20B are diagrams illustrating an example of an indication by the MAC CE according to option 2-2-1.
[FIG. 21] Figs. 21A and 21B are diagrams illustrating an example of an indication by the MAC CE according to option 2-2-2.
[FIG. 22] Figs. 22A and 22B are diagrams illustrating an example of an indication by the MAC CE according to option 2-2-3.
[FIG. 23] Figs. 23A and 23B are diagrams illustrating an example of an indication by the MAC CE according to option 2-2-4.
[FIG. 24] Figs. 24A to 24C are diagrams illustrating an example of an indication field according to options 2-3-1/2-3-2/2-3-3.
[FIG. 25] Figs. 25A and 25B are diagrams illustrating an example of the MAC CE according to options 3-1-1/3-1-2.
[FIG. 26] Figs. 26A and 26B are diagrams illustrating an example of the MAC CE according to options 3-2-1/3-2-2.
[FIG. 27] Fig. 27 is a diagram illustrating an example of a procedure of change/handover of the second cell according to a fifth embodiment.
[FIG. 28] Fig. 28 is a diagram illustrating another example of a procedure of change/handover of the second cell according to the fifth embodiment.
[FIG. 29] Fig. 29 is a diagram illustrating another example of a procedure of change/handover of the second cell according to the fifth embodiment.
[FIG. 30] Fig. 30 is a diagram illustrating an example of a position of a UE according to option 5-1-2-1.
[FIG. 31] Fig. 31 is a diagram illustrating an example of a position of a UE according to option 5-1-2-2.
[FIG. 32] Fig. 32 is a diagram illustrating an example of a position of a UE according to option 5-1-2-3.
[FIG. 33] Fig. 33 is a diagram illustrating an example of a position of a UE according to option 5-1-2-4.
[FIG. 34] Fig. 34 is a diagram illustrating an example of a schematic configuration of a radio communication system according to one embodiment.
[FIG. 35] Fig. 35 is a diagram illustrating an example of a configuration of a base station according to one embodiment.
[FIG. 36] Fig. 36 is a diagram illustrating an example of a configuration of a user terminal according to one embodiment.
[FIG. 37] Fig. 37 is a diagram illustrating an example of a hardware configuration of the base station and the user terminal according to one embodiment.
[FIG. 38] Fig. 38 is a diagram illustrating an example of a vehicle according to one embodiment.

### Description of Embodiments

### (Cell-free)

Existing radio communication systems (for example, 5G NR) have adopted a cellular scheme in which one cell is formed by one antenna/transmission and reception point (TRP) in principle. The area formed by the cell is fixed/static.

In addition, in an existing radio communication system (for example, Rel. 16 or later), distributed Multi Input Multi Output(Distributed MIMO, e.g., multi-TRPs utilizing a plurality of TRPs) that forms a communication area by coverage of a plurality of antennas/TRPs has been introduced. In distributed MIMO, simultaneous communication using a plurality of antennas/TRPs and communication using one antenna/TRP can be performed.

By adopting distributed MIMO, a more preferable line-of-sight environment can be prepared, and performance related to MIMO can be improved.

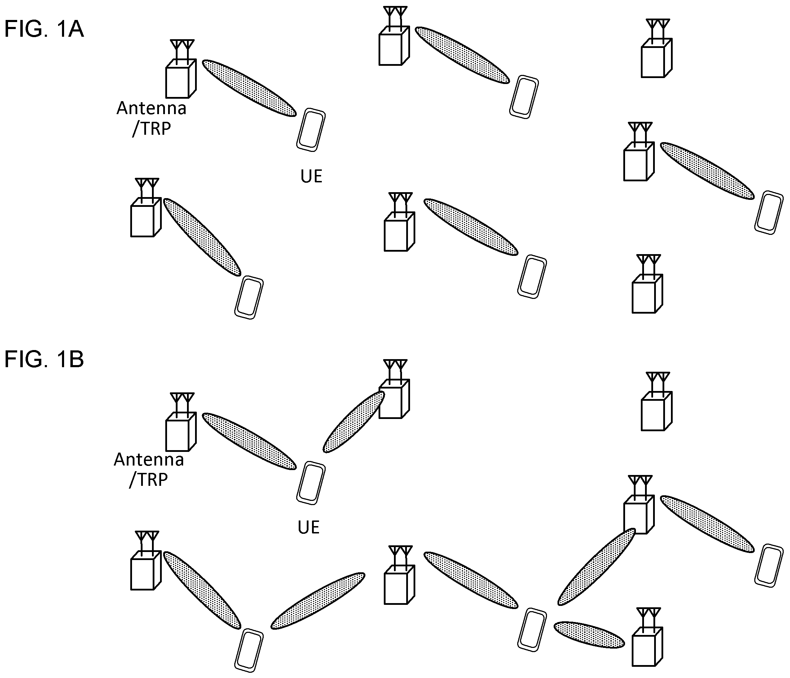

Figs. 1A and 1B are diagrams illustrating an outline of MIMO. Fig. 1A illustrates an example of Co-located MIMO. In Co-located MIMO, one UE communicates with one antenna/TRP.

On the other hand, Fig. 1B illustrates an example of distributed MIMO. In distributed MIMO, one UE communicates with multiple coordinated antennas/TRPs.

In a future radio communication system (for example, Rel. 20 or later), introduction of cell-free communication has been studied for the purpose of further improving performance and improving energy consumption efficiency through reduction of interference among a plurality of antennas/TRPs, improvement of a line-of-sight environment corresponding to utilization of a high frequency, improvement of frequency utilization efficiency of the entire system, and application of equal and high quality communication to each user.

The cell-free may be referred to as cell-free massive MIMO (mMIMO) or large-scale distributed MIMO(distributed MIMO, D-MIMO). The cell-free uses coherent coordination of a large number of access points. The cell-free may include at least one of ultra-dense deployment, scalable cooperation, user-centric clustering, super-carrier aggregation, and analog fronthaul. The user plane for cell-free may perform scheduling more flexibly than existing scheduling. The control plane for cell-free may maintain some form of cell to facilitate signaling.

In the cell-free, unlike a conventional cellular system, one area (which may be referred to as a cell/sub-cell or the like) may be formed by a plurality of antennas/TRPs. That is, the area may mean a cell that does not depend on the position of the antenna/TRP.

In the cell-free, the set of antennas/TRPs used for area formation may be changed according to the demand of the UE. For example, the set of antennas/TRPs may be changed based on the number of UEs/the number of traffic/communication applications (for example, initial access/data communication/measurement/report, etc.) or the like that is not the coverage of the antennas/TRPs.

In other words, in the cell-free, the coverage among a plurality of antennas/TRPs may overlap.

In the cell-free, a direction in which a synchronization signal (for example, it may be referred to as a synchronization signal block (SSB), a synchronization signal/physical broadcast channel (SS/PBCH) block, or the like) is transmitted may be controlled in each antenna/TRP.

Further, in the cell-free, central unit (CU)/distributed unit (DU) may be virtualized for each antenna. Alternatively, each antenna may be managed only by the CU.

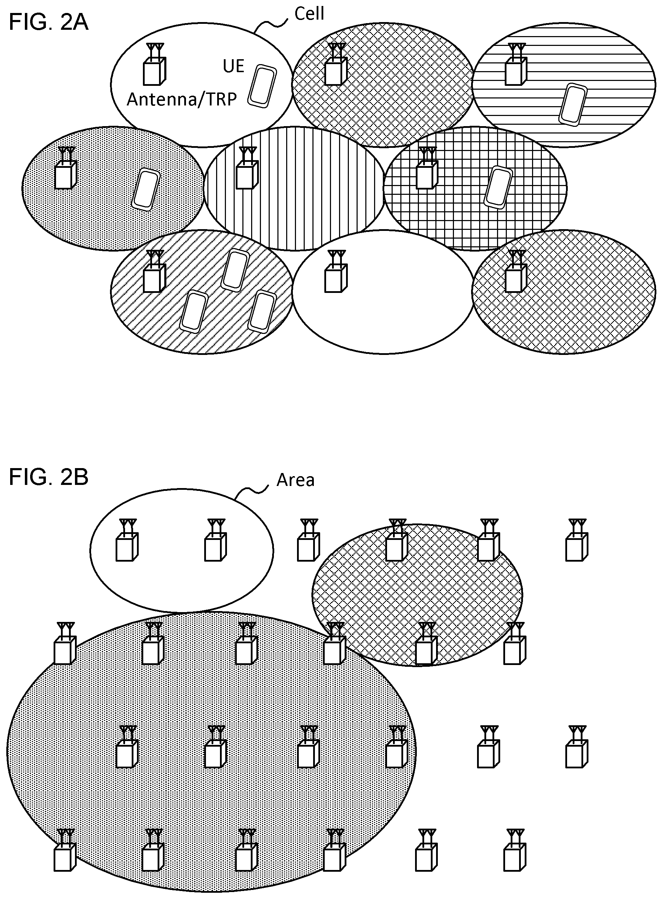

Fig. 2A is a diagram illustrating an outline of a cellular system. Fig. 2A illustrates a cell formed by each antenna/TRP, and the UE performs communication based on the cell.

On the other hand, Fig. 2B is a diagram illustrating an outline of the cell-free system. In the example illustrated in Fig. 2B, the installed antenna/TRP does not form a fixed/static cell in a cellular system. As illustrated in Fig. 2B, in the cell-free system, one or more antennas/TRPs form an area according to a condition. Therefore, in the cell-free system, each antenna/TRP may not need to correspond to the same physical cell ID, and areas among a plurality of antennas/TRPs may overlap.

The cell-free may be realized, for example, by adjusting a set of antennas/TRPs controlled by a central control unit (for example, CU).

In the cell-free system, a first cell (for example, it may be referred to as a cell/super cell/macro cell/large cell, or the like.) whose physical range is fixed, such as a cell in a 5G NR system, and a second cell (for example, it may be referred to as a sub-cell/area/micro cell/cell/small cell/second cell in the first cell, or the like) whose physical range semi-statically/dynamically fluctuates based on a condition may be formed.

For example, to distinguish from the second cell, the first cell may be referred to as a super cell. In a case where super cell is composed of a plurality of second cells, the second cell may have a definition/operation/coverage similar to an existing cell in NR. For example, to distinguish from the first cell, the second cell may be referred to as a sub-cell. In a case where a super cell or the cell is composed of a plurality of sub-cells, the sub-cell may have a definition/operation/coverage similar to an existing cell in NR.

The first cell may be a cell newly defined in a future radio communication system, or a definition of a cell in an existing radio communication system may be reused.

For the configuration of the first cell and the second cell, the following Assumptions 1 and 2 are considered:
Assumption 1: The first cell includes a plurality of TRPs having one cell ID (physical cell ID (PCI)). A plurality of TRPs can perform transmission and reception in cooperation.
Assumption 2: The first cell is composed of a plurality of TRPs (or sub-cells) with different cell IDs. A plurality of TRPs/sub-cells can perform transmission and reception in cooperation.

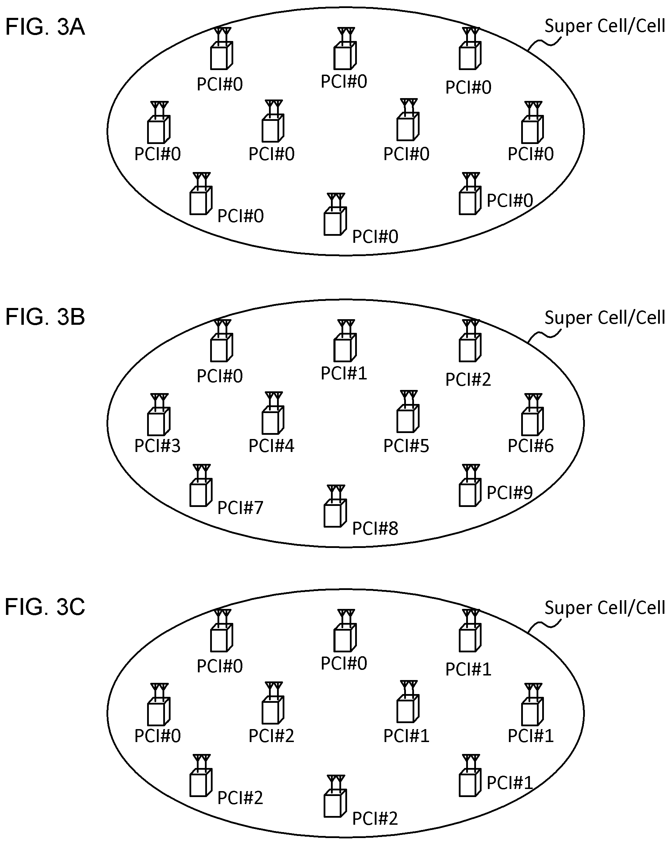

Fig. 3A is a diagram illustrating an example of an outline of Assumption 1 of the cell-free configuration. In the example illustrated in Fig. 3A, each TRP included in the first cell (super cell/cell) has the same PCI (PCI#0). A plurality of TRPs can perform communication in cooperation with one UE.

Fig. 3B is a diagram illustrating an example of an outline of Assumption 2 of the cell-free configuration. In the example illustrated in Fig. 3B, each TRP included in the first cell (super cell/cell) has a different PCI (PCI#0 to PCI#9). A plurality of TRPs can perform communication in cooperation with one UE.

Fig. 3C is a diagram illustrating another example of an outline of Assumption 2 of the cell-free configuration. In the example illustrated in Fig. 3C, a PCI is allocated to each TRP included in the first cell (super cell/cell). In the example illustrated in Fig. 3C, different from the example in Fig. 3B, the same PCI may correspond to a plurality of TRPs. A plurality of TRPs can perform communication in cooperation with one UE.

Transmission/reception with TRP/sub-cell coordination may be based on at least one of the following several schemes supported in NR.
· Transmission of a single TRP/sub-cell with dynamic TRP/sub-cell switching (single TRP transmission).
· Joint transmission (multi-TRP joint transmission) using a plurality of TRPs/sub-cells. The joint transmission may be based on a single DCI or multi-DCIs. The joint transmission may be non-coherent joint transmission (NCJT) or coherent joint transmission (CJT).

For the cell-free, assuming ideal backhaul and tight coordination, in a joint transmission manner, CJT may be prioritized over NCJT, and single-DCI-based joint transmission may be prioritized over multi-DCIs-based joint transmission.

### (Each Configuration in Cell-free)

Hereinafter, an example of a configuration in cell-free will be described.

In the present disclosure, a cell whose physical range is fixed, a cell whose physical range is not changed, a first cell, a super cell, a cell, a macro cell, a large cell, and the like may be interchangeable with each other.

In the present disclosure, a cell whose physical range varies semi-statically/dynamically based on a condition, a cell to be changed, a second cell, a cell, an area, a micro cell, a small cell, a second cell in a first cell, and the like may be interchangeable with each other.

In the present disclosure, an area, a cell, a coverage, a range, and the like may be interchangeable with each other.

The first cell may include one or more second cells.

One second cell may be included in a plurality of first cells. The different first cells may share one second cell.

The different first cells may or may not need to overlap.

The UE may transmit and receive a signal using the second cell included in the first cell. The UE may receive the configuration related to the second cell and transmit and receive the signal based on the configuration.

A component of one physical cell ID (PCI) may include at least one of the following:
· Number of TRPs for each PCI.
· TRP coverage layout.
· Number of synchronization signals (for example, SSB, SS/PBCH block) for each TRP.

The configuration of the first cell may be associated with a component of the PCI. The first cell may be configured based on components of the PCI.

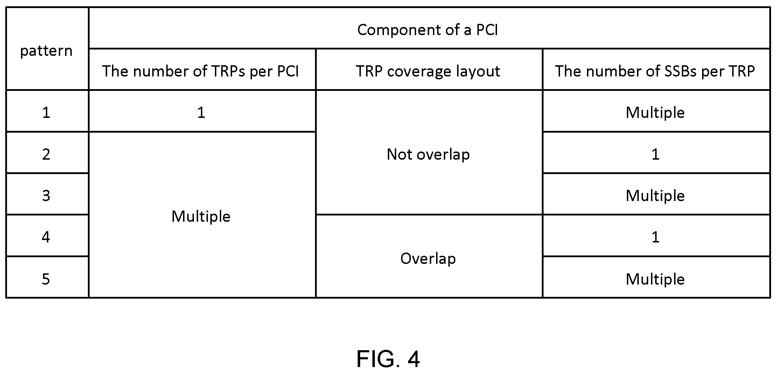

Fig. 4 is a diagram illustrating an example of a pattern of components (PCI components) of one PCI. As illustrated in Fig. 4, the PCI component includes the number of TRPs for each PCI, a TRP coverage layout, and the number of SSBs for each TRP.

As illustrated in Fig. 4, the number of TRPs for each PCI may take one or more values, the TRP coverage layout may take any of overlapping or not overlapping coverage of TRPs, and the number of SSBs for each TRP may take one or more values.

In the present disclosure, the pattern related to the PCI component may be any of patterns 1 to 5 illustrated in Fig. 4. The numbers of the patterns illustrated in Fig. 4 are all examples, and are not limited to this example. In addition, the PCI component may include elements other than the elements illustrated in Fig. 4.

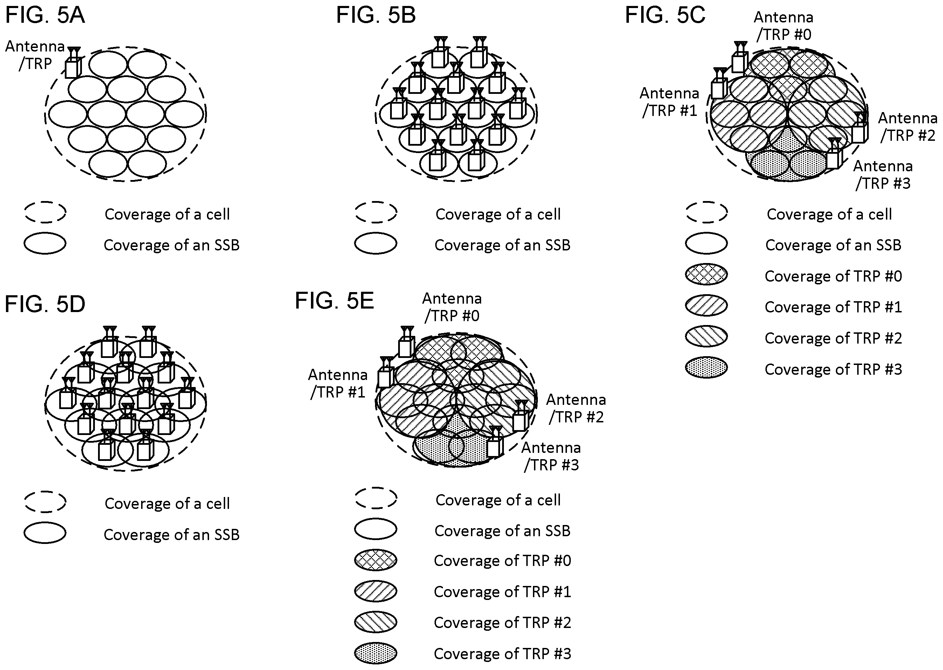

Fig. 5A is a diagram illustrating an example of a cell configuration according to pattern 1. In the cell configuration illustrated in Fig. 5A, the number of TRPs included in PCI/cell is one, the TRP coverage does not overlap, and the number of SSBs for each TRP is two or more. Note that, in the cell configuration in Fig. 5A, the coverage of the TRP may match the coverage of the cell (first cell) (therefore, the coverage of the TRP is not illustrated in Fig. 5A).

For example, an inter-cell multi-TRP operation can be performed using the cell configuration according to pattern 1 as illustrated in Fig. 5A.

Fig. 5B is a diagram illustrating an example of a cell configuration according to pattern 2. In the cell configuration illustrated in Fig. 5B, there are a plurality of TRPs included in PCI/cell, the TRP coverage does not overlap, and the number of SSBs for each TRP is one. Note that, in the cell configuration in Fig. 5B, the coverage of the TRP may match the coverage of the SSB (therefore, the coverage of the TRP is not illustrated in Fig. 5B).

For example, the inter-cell multi-TRP operation can be performed using the cell configuration according to pattern 2 as illustrated in Fig. 5B.

Fig. 5C is a diagram illustrating an example of a cell configuration according to pattern 3. In the cell configuration illustrated in Fig. 5C, the number of TRPs included in PCI/cell is plural, the TRP coverage does not overlap, and there are a plurality of SSBs for each TRP.

For example, the inter-cell multi-TRP operation can be performed using the cell configuration according to pattern 3 as illustrated in Fig. 5C.

Fig. 5D is a diagram illustrating an example of a cell configuration according to pattern 4. In the cell configuration illustrated in Fig. 5D, the number of TRPs included in PCI/cell is plural, the TRP coverage overlaps, and the number of SSBs for each TRP is one. Note that, in the cell configuration in Fig. 5D, the coverage of the TRP may match the coverage of the SSB (therefore, the coverage of the TRP is not illustrated in Fig. 5D).

For example, the inter-cell/intra-cell multi-TRP operation can be performed using the cell configuration according to pattern 3 as illustrated in Fig. 5D.

Fig. 5E is a diagram illustrating an example of a cell configuration according to pattern 5. In the cell configuration illustrated in Fig. 5E, the number of TRPs included in PCI/cell is plural, the TRP coverage overlaps, and there are a plurality of SSBs for each TRP.

For example, the inter-cell/intra-cell multi-TRP operation can be performed using the cell configuration according to pattern 3 as illustrated in Fig. 5D.

Further, a component of one second cell (for example, the area) may include at least one of the following:
· Number of CUs/DUs for each second cell.
· Number of PCIs for each second cell.
· Number of TRPs for each second cell.
· Number of synchronization signals (for example, SSB, SS/PBCH block) for each second cell.

The configuration of the second cell may be associated with a component of the second cell. The second cell may be configured based on a component of the second cell.

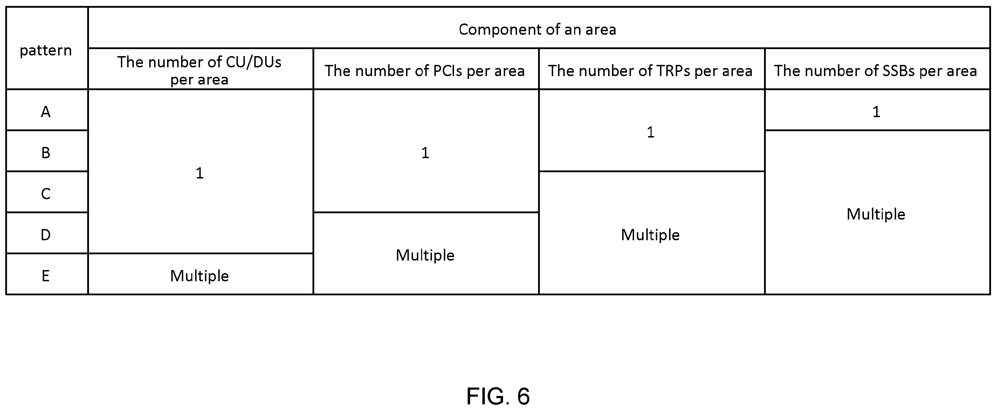

Fig. 6 is a diagram illustrating an example of a pattern of components (area components) of one area. As illustrated in Fig. 6, the area component includes the number of CUs/DUs for each area, the number of PCIs for each area, the number of TRPs for each area, and the number of synchronization signals for each area.

As illustrated in Fig. 6, the number of CUs/DUs for each second cell, the number of PCIs for each second cell, the number of TRPs for each second cell, and the number of synchronization signals for each second cell can each take one or more values.

In the present disclosure, the pattern related to the area component may be any of patterns A to E illustrated in Fig. 6. Each symbol of the pattern illustrated in Fig. 6 is an example and is not limited to this example. In addition, the area component may include elements other than the elements illustrated in Fig. 6.

For example, the second cell according to patterns A, D, and E may be configurable in any first cell (cell configuration).

Hereinafter, configurations regarding the first cell/the second cell in a case where different cells overlap and a case where different cells do not overlap will be described. At least one of the configurations for the first cell/the second cell described below may be defined/set.

### <<Configurations of first cell/second cell according to pattern 1>>

### [Option 1.1]

The different first cells may not need to overlap (physically).

In this option, the second cell according to at least one of patterns A, B, D, and E described above may be configured.

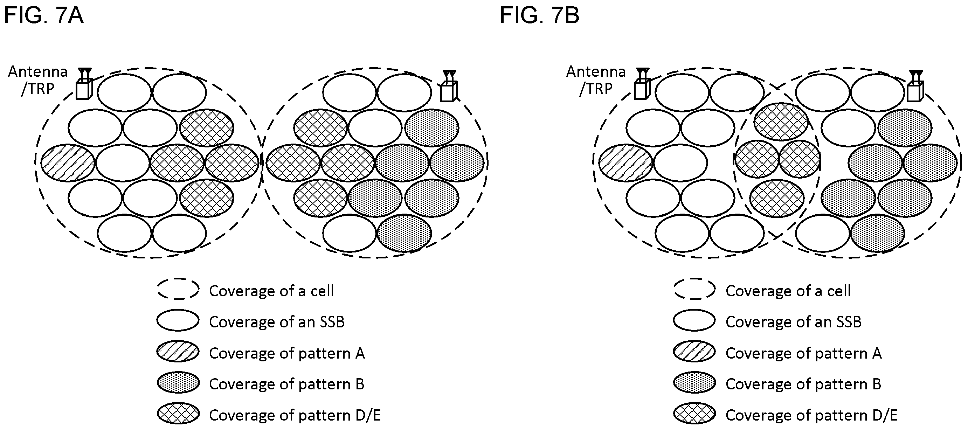

Fig. 7A is a diagram illustrating an example of a configuration of first/second cells according to option 1.1. In the example illustrated in Fig. 7A, two different cells (first cells) do not overlap.

In the example illustrated in Fig. 7A, the second cell (the coverage of the second cell) according to pattern A, the second cell (the coverage of the second cell) according to pattern B, and the second cell (the coverage of the second cell) according to pattern D/E are illustrated.

Note that, in the cell configuration in Fig. 7A, the coverage of the TRP may match the coverage of the cell (first cell) (therefore, the coverage of the TRP is not illustrated in Fig. 7A).

In the configuration of this option, only a single TRP operation may be operable in each second cell.

According to the configuration of the present option, more preferable network energy saving (NES) can be performed.

### [Option 1.2]

The different first cells may overlap (physically).

In this option, the second cell according to at least one of patterns A, B, D, and E described above may be configured.

Fig. 7B is a diagram illustrating an example of a configuration of the first/second cells according to option 1.2. In the example illustrated in Fig. 7B, two different cells (first cells) overlap.

In the example illustrated in Fig. 7B, the second cell (the coverage of the second cell) according to pattern A, the second cell (the coverage of the second cell) according to pattern B, and the second cell (the coverage of the second cell) according to pattern D/E are illustrated.

Note that, in the cell configuration in Fig. 7B, the coverage of the TRP may match the coverage of the cell (first cell) (therefore, the coverage of the TRP is not illustrated in Fig. 7B).

In the configuration of this option, for example, the inter-cell multi-TRP operation may be operable in the second cell according to pattern D/E.

According to the configuration of this option, for example, the uniformity of communication quality can be enhanced by increasing the coverage in the overlapping cells.

In addition, according to the configuration of this option, for example, the frequency utilization efficiency can be increased by reducing the coverage in the overlapping cells.

In addition, in the configuration of this option, by reusing the antenna/TRP of the existing NR specification, it is possible to operate by changing the antenna/TRP device so as to overlap the coverage developed in the existing NR, and it is possible to reduce the installation cost.

### <<Configurations of first cell/second cell according to pattern 2/pattern 4>>

### [Option 2/4.1]

The different first cells may not need to overlap (physically).

In this option, the second cell according to at least one of patterns A, C, D, and E may be configured.

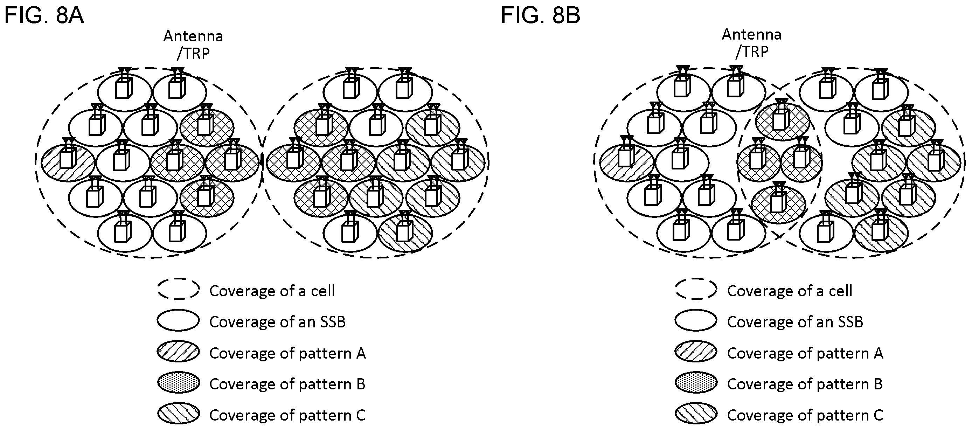

Fig. 8A is a diagram illustrating an example of a configuration of first/second cells according to option 2/4.1. In the example illustrated in Fig. 8A, two different cells (first cells) do not overlap.

In the example illustrated in Fig. 8A, the second cell (the coverage of the second cell) according to pattern A, the second cell (the coverage of the second cell) according to pattern C, and the second cell (the coverage of the second cell) according to pattern D/E are illustrated.

Note that, in the cell configuration in Fig. 8A, the coverage of the TRP may match the coverage of the SSB (therefore, the coverage of the TRP is not illustrated in Fig. 8A).

In addition, in the configuration of this option, only a single TRP operation may be operable in each second cell.

According to the configuration of this option, for example, by increasing the number of TRPs per first cell, it is possible to improve uniformity of communication quality and frequency utilization efficiency.

### [Option 2/4.2]

The different first cells may overlap (physically).

In this option, the second cell according to at least one of patterns A, C, D, and E may be configured.

Fig. 8B is a diagram illustrating an example of a configuration of first/second cells according to option 2/4.2. In the example illustrated in Fig. 8B, two different cells (first cells) overlap.

In the example illustrated in Fig. 8B, the second cell (the coverage of the second cell) according to pattern A, the second cell (the coverage of the second cell) according to pattern C, and the second cell (the coverage of the second cell) according to pattern D/E are illustrated.

Note that, in the cell configuration in Fig. 8B, the coverage of the TRP may match the coverage of the SSB (therefore, the coverage of the TRP is not illustrated in Fig. 8B).

In the configuration of this option, for example, the inter-cell multi-TRP operation may be operable in the second cell according to pattern D/E.

According to the configuration of this option, for example, the uniformity of communication quality can be enhanced by increasing the coverage in the overlapping cells.

In addition, according to the configuration of this option, for example, the frequency utilization efficiency can be increased by reducing the coverage in the overlapping cells.

Further, according to the configuration of this option, for example, by increasing the number of TRPs per first cell, it is possible to improve uniformity of communication quality and frequency utilization efficiency.

### <<Configurations of pattern 3/first cell according to pattern 5/second cell>>

### [Option 3/5.1]

The different first cells may not need to overlap (physically).

In this option, the second cell according to at least one of patterns A, B, C, D, and E may be configured.

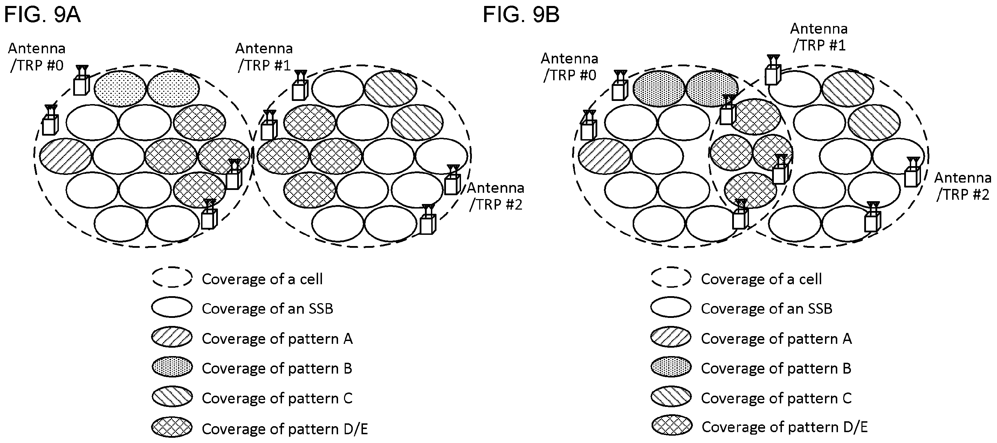

Fig. 9A is a diagram illustrating an example of a configuration of first/second cells according to option 3/5.1. In the example illustrated in Fig. 9A, two different cells (first cells) do not overlap.

In the example illustrated in Fig. 9A, the second cell (the coverage of the second cell) according to pattern A, the second cell (the coverage of the second cell) according to pattern B, the second cell (the coverage of the second cell) according to pattern C, and the second cell (the coverage of the second cell) according to pattern D/E are illustrated.

Note that an example is illustrated in which the second cell according to pattern B illustrated in Fig. 9A is included only in the coverage of antenna/TRP #0. In addition, an example is illustrated in which the second cell according to pattern C illustrated in Fig. 9A corresponds to an overlapping portion between the coverage of antenna/TRP #1 and the coverage of antenna/TRP #2.

In the configuration of this option, a single TRP operation may be operable in each second cell.

Further, in the configuration of this option, the intra-cell multi-TRP operation may be operable in the second cell in which the coverages of the plurality of TRPs overlap. With this configuration, the frequency utilization efficiency can be improved.

Further, according to the configuration of this option, for example, by increasing the number of TRPs per first cell, it is possible to improve uniformity of communication quality and frequency utilization efficiency.

### [Option 3/5.2]

The different first cells may overlap (physically).

In this option, the second cell according to at least one of patterns A, B, C, D, and E may be configured.

Fig. 9B is a diagram illustrating an example of a configuration of first/second cells according to option 3/5.2. In the example illustrated in Fig. 9B, two different cells (first cells) overlap.

In the example illustrated in Fig. 9B, the second cell (the coverage of the second cell) according to pattern A, the second cell (the coverage of the second cell) according to pattern B, the second cell (the coverage of the second cell) according to pattern C, and the second cell (the coverage of the second cell) according to pattern D/E are illustrated.

Note that an example is illustrated in which the second cell according to pattern B illustrated in Fig. 9B is included only in the coverage of antenna/TRP #0. In addition, an example is illustrated in which the second cell according to pattern C illustrated in Fig. 9B corresponds to an overlapping portion between the coverage of antenna/TRP #1 and the coverage of antenna/TRP #2.

In the configuration of this option, for example, the inter-cell multi-TRP operation may be operable in the second cell according to pattern D/E.

Further, in the configuration of this option, in the case of the cell configuration of pattern 5, the intra-cell multi-TRP operation may be operable. With this configuration, the frequency utilization efficiency can be improved.

According to the configuration of this option, for example, the uniformity of the communication quality and the frequency utilization efficiency can be enhanced as compared with option 1.2, and the installation cost can be suppressed as compared with option 2/4.2.

### <<Flexibility of second cell>>

The second cell may be configured/reconfigured based on a certain condition/trigger. An example of the definition of the second cell will be described in detail below.

The configuration of the second cell may be changed/updated based on a certain condition/trigger.

The certain condition/trigger may be, for example, at least one of a condition/trigger related to the distribution of the UE, a condition/trigger related to traffic, a condition/trigger related to a particular event, and a condition/trigger based on certain information (for example, at least one of the information regarding the time, the position information regarding the UE/TRP, and the information regarding moment).

For example, the condition/trigger for the distribution of UEs may be a condition/trigger based on the distribution/number of UEs in the first cell/the second cell.

For example, the condition/trigger regarding the traffic may be a condition/trigger based on at least one of the traffic volume/communication volume in the first cell/the second cell, the traffic volume/communication volume for the TRP, and the traffic volume/communication volume for the SSB.

For example, a particular event related to a condition/trigger for a particular event may be predefined in the specification or may depend on the implementation of the NW.

For example, the condition/trigger based on the certain information may be a condition/trigger based on at least one of information regarding time, information regarding a certain timer, position information regarding UE/TRP, and information regarding moment (for example, date and time/day of the week/climate, and the like).

The second cell may be statically configured based on the certain condition/trigger or regardless of the certain condition.

The second cell may be configured dynamically/semi-statically based on the certain condition/trigger. With this configuration, the power consumption in the NW can be reduced, and the communication quality can be provided according to the demand of the UE.

A restriction regarding the change/update of the second cell may be defined. The NW may determine not to change/update the second cell in certain cases.

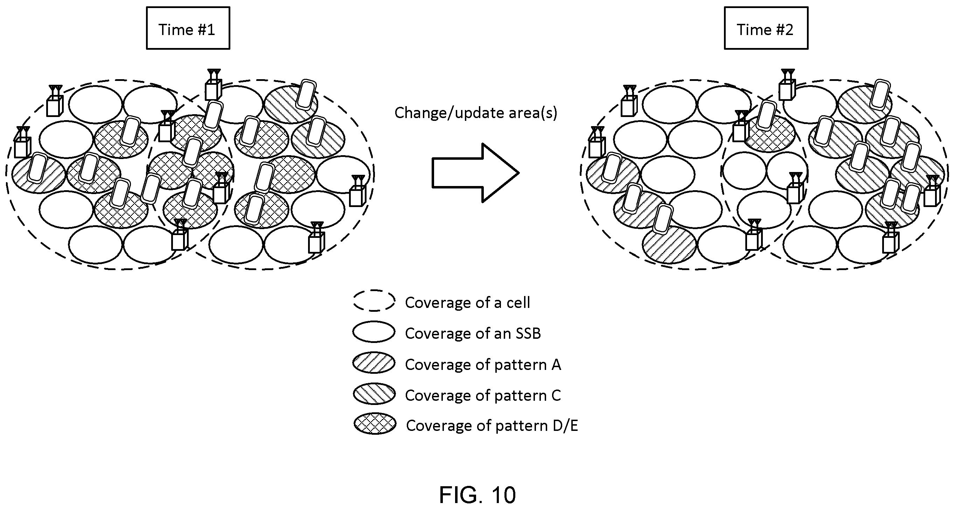

Fig. 10 is a diagram illustrating an example of a change in the configuration of the second cell. The example illustrated in Fig. 10 illustrates a case where the range of the second cell (area) is changed in accordance with changes in the distribution of the UEs and the time (from time #1 to time #2).

### <<Definition of Second Cell>>

Hereinafter, an example of the configuration/definition of the second cell will be described.

As for the configuration/definition of the second cell, at least one of the following options 0.1 and 0.2 may be combined with the above description of the second cell as appropriate without contradiction.

### [Option 0.1]

The second cell may be configured by one cell (first cell)/PCI.

For example, the second cell may be identified by PCI (as in the existing NR). For example, the second cell may include a PCI as in the existing NR.

For example, the PCI may be defined similarly to the PCI defined in the existing NR.

This option may correspond to the above Assumption 1.

### [[Option 0.1.1]]

The second cell may be configured by one TRP for one cell. In other words, one second cell may correspond to one TRP.

### [[[Option 0.1.1.1]]]

The second cell may be configured by one synchronization signal (for example, at least one of an SSB and an SS/PBCH block) for one cell. In other words, one second cell may correspond to one synchronization signal. Such a configuration corresponds to, for example, the second cell according to pattern A in at least one of the above options 1.1, 1.2, 2/4.1, 2/4.2, 3/5.1, and 3/5.2.

### [[[Option 0.1.1.2]]]

The second cell may include a plurality of synchronization signals (for example, a part of the synchronization signals for one cell) for one cell. In other words, one second cell may correspond to a plurality of synchronization signals (a part of the synchronization signals for one cell). Such a configuration corresponds to, for example, the second cell according to pattern B in at least one of options 1.1, 1.2, 3/5.1, and 3/5.2 described above.

### [[[Option 0.1.1.3]]]

The second cell may include a plurality of synchronization signals (for example, all synchronization signals for one cell) for one cell. In other words, one second cell may correspond to a plurality of synchronization signals (all synchronization signals for one cell). Such a configuration corresponds to, for example, the second cell according to pattern B in at least one of options 1.1 and 1.2.

### [[Option 0.1.2]]

The second cell may include a plurality of TRPs (for example, a part of the TRPs for one cell) for one cell. In other words, one second cell may correspond to a plurality of TRPs (a part of the TRPs for one cell).

### [[[Option 0.1.2.1]]]

The second cell may include a plurality of synchronization signals (for example, a part of the synchronization signals for one cell) for one cell. In other words, one second cell may correspond to a plurality of synchronization signals (a part of the synchronization signals for one cell). Such a configuration corresponds to, for example, the second cell according to pattern C in at least one of options 2/4.1, 2/4.2, 3/5.1, and 3/5.2.

### [[Option 0.1.3]]

The second cell may include a plurality of TRPs (for example, all TRPs for one cell) for one cell. In other words, one second cell may correspond to a plurality of TRPs (all TRPs for one cell).

### [[[Option 0.1.3.1]]]

The second cell may be configured by one synchronization signal (for example, at least one of an SSB and an SS/PBCH block) for one cell. In other words, one second cell may correspond to one synchronization signal. Such a configuration corresponds to, for example, the second cell according to pattern A in at least one of options 1.1 and 1.2.

### [[[Option 0.1.3.2]]]

The second cell may include a plurality of synchronization signals (for example, a part of the synchronization signals for one cell) for one cell. In other words, one second cell may correspond to a plurality of synchronization signals (a part of the synchronization signals for one cell). Such a configuration corresponds to, for example, the second cell according to pattern B in at least one of options 1.1 and 1.2 and the second cell according to pattern C in at least one of options 3/5.1 and 3/5.2.

### [[[Option 0.1.3.3]]]

The second cell may include a plurality of synchronization signals (for example, all synchronization signals for one cell) for one cell. In other words, one second cell may correspond to a plurality of synchronization signals (all synchronization signals for one cell). Such a configuration corresponds to, for example, the second cell according to pattern B in at least one of options 1.1 and 1.2 and the second cell according to pattern C in at least one of options 2/4.1, 2/4.2, 3/5.1, and 3/5.2.

### [Option 0.2]

The second cell may include a plurality of cells (first cell)/PCI.

For example, the PCI may be defined similarly to the PCI defined in the existing NR.

This option may correspond to the above Assumption 2.

### [[Option 0.2.1]]

The second cell may include a plurality of TRPs. In other words, one second cell may correspond to a plurality of TRPs.

For example, the TRP may be defined similarly to the TRP defined in the existing NR.

### [[[Option 0.2.1.1]]]

The second cell may be configured by a plurality of synchronization signals. In other words, one second cell may correspond to a plurality of synchronization signals. Such a configuration corresponds to, for example, the second cell according to pattern D/E in at least one of the above options 1.1, 1.2, 2/4.1, 2/4.2, 3/5.1, and 3/5.2.

Each of the above options may be selected/determined based on the above conditions/trigger (for example, conditions/triggers based on time/number of UEs/traffic, etc.).

The change/update of each option described above may be configured/indicated/notified to the UE based on at least one of system information (for example, SIB/MIB), upper layer signaling (RRC parameter/MAC CE), and DCI.

The change/update of each of the above options may be performed based on the above conditions/trigger (for example, a timer/event), or may be performed based on the implementation of the NW/UE.

The second cell may be identified by a certain ID.

The certain ID may have a fixed value.

Furthermore, the certain ID may be a virtual ID. In other words, the certain ID is an ID that can be dynamically changed, and the configuration/range/position of the second cell may be dynamically changed with the change of the ID.

Common/dedicated configuration/parameters with respect to the plurality of second cells may be notified to the UE. The configuration/parameter may be notified using, for example, an upper layer (RRC) parameter.

The configuration/parameter may be, for example, a configuration/parameter related to PCI/TRP/SSB.

The second cell may be used for a certain purpose/property. In other words, the second cell may be defined/configured/identified with a certain purpose/property.

The certain purpose may be, for example, at least one of a control plane, a user plane, paging, measurement, reporting, measurement reporting, beam indication/activation, transmission and reception of certain channels/signals (for example, PUCCH/PUSCH/SRS/PDCCH/PDSCH/CSI-RS), initial access, ondemand signals, and trigger signals for handover.

The certain property may be, for example, at least one of a Doppler shift, a Doppler spread, an average delay, an average spread, a band/component carrier, a subcarrier spacing, a TCI state, a spatial relationship, a QCL type, a timing advance value, downlink transmission timing, and an RNTI.

The number of PCIs/TRPs/SSBs in one second cell (for example, the maximum number) may be predefined in the specification, may be configured/indicated/notified to the UE by using upper layer signaling (RRC/MAC CE)/DCI, may be determined based on reporting of UE capability information, or may be determined by combining at least two of them.

The second cells may be arranged in succession (physically/spatially). In addition, the second cells may be arranged discontinuously (physically/spatially) from each other.

### <<Sharing between second cells>>

### [Option 0.3.1]

A synchronization signal (for example, at least one of an SSB and an SS/PBCH block) may be shared among the plurality of second cells. It may be assumed that the UE can receive the same (shared/common) synchronization signal in different second cells.

In this case, the information included in the synchronization signal may be configurable as information specific to the second cell.

In option 0.3.1, the TRP/PCI may be shared among the plurality of second cells.

In option 0.3.1, among the plurality of second cells, at least one of an ID (for example, SSB ID/SSB Index/Candidate SSB Index) related to the same synchronization signal, an ID (for example, at least one of an ID for identifying a TRP, a TRP ID, and a CORESET pool index) related to the same TRP, and the same PCI may be used.

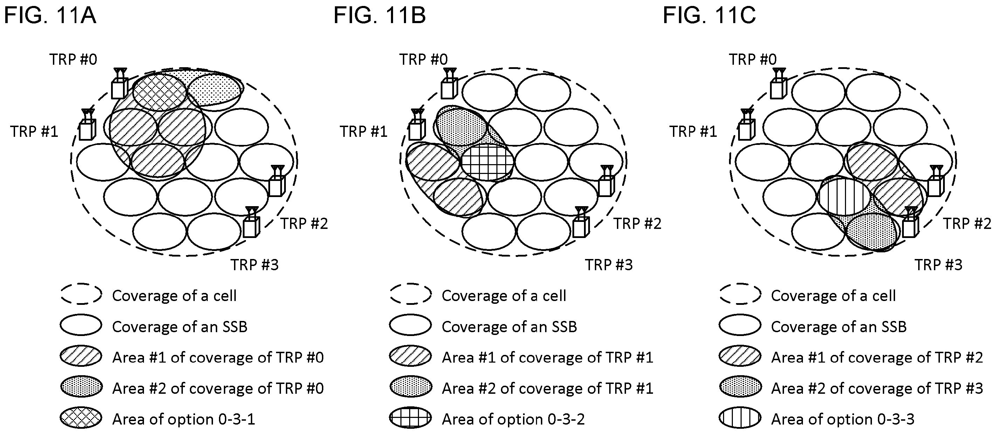

Fig. 11A is a diagram illustrating an example of an area according to option 0.3.1. Fig. 11A illustrates one cell including TRP #0 to TRP #3. In the example illustrated in Fig. 11A, area #1 and area #2 are formed within the coverage of TRP #0. The areas in which area #1 and area #2 overlap have the same SSB coverage. That is, in the overlapping area, area #1 and area #2 can share the same SSB/TRP/PCI.

By enabling the configuration as in option 0.3.1, the most flexible configuration of the second cell becomes possible.

### [Option 0.3.2]

A synchronization signal may not need to be shared among the plurality of second cells. It may be assumed that the UE does not receive the same (shared/common) synchronization signal in different second cells.

In this case, the information included in the synchronization signal may be configurable as information specific to the second cell. In this case, the second cell may be identified by using an index related to the synchronization signal.

In option 0.3.2, the TRP/PCI may be shared among the plurality of second cells.

In option 0.3.2, among the plurality of second cells, at least one of an ID (for example, at least one of an ID for identifying a TRP, a TRP ID, and a CORESET pool index) related to the same TRP and the same PCI may be used.

Fig. 11B is a diagram illustrating an example of an area according to option 0.3.2. Fig. 11B illustrates one cell including TRP #0 to TRP #3. In the example illustrated in Fig. 11B, area #1 and area #2 are formed within the coverage of TRP #1. Since area #1 and area #2 do not overlap each other, area #1 and area #2 have different SSB coverages. Therefore, the areas included in area #1 or area #2 do not share the same SSB but can share the same TRP/PCI.

In a configuration such as option 0.3.2, the maximum number of second cells in the first cell may be a number of synchronization signals (SSB/SSB coverage). Also, in a case where the second cell spans multiple SSB coverages, the maximum number of second cells in the first cell may be the number of SSBs (SSB groups) spanning across.

### [Option 0.3.3]

The synchronization signal and the TRP may not need to be shared among the plurality of second cells. It may be assumed that the UE does not transmit and receive signals to and from the same TRP and does not receive the same (shared/common) synchronization signal in different second cells.

In this case, the information included in the synchronization signal may be configurable as information specific to the second cell. In this case, the second cell may be identified by using an index related to the synchronization signal. In this case, the second cell may be identified by using an ID related to the TRP (an ID for identifying the TRP).

In option 0.3.3, a PCI may be shared among the plurality of second cells.

In option 0.3.3, the same PCI may be used among a plurality of second cells.

Fig. 11C is a diagram illustrating an example of an area according to option 0.3.3. Fig. 11C illustrates one cell including TRP #0 to TRP #3. In the example illustrated in Fig. 11C, area #1 is formed within the coverage of TRP #2, and area #2 is formed within the coverage of TRP #3. Since area #1 and area #2 do not overlap each other, area #1 and area #2 have different SSB coverages. Therefore, the areas included in area #1 or area #2 do not share the same SSB, do not share the same TRP, and can share the same PCI.

In a configuration such as option 0.3.3, the maximum number of second cells in the first cell may be the number of TRPs. In addition, in a case where a second cell straddles a plurality of TRPs, the maximum number of second cells in the first cell may be the number of TRPs (TRP groups) straddled by the second cell.

### [Option 0.3.4]

The synchronization signal, the TRP, and the PCI may not need to be shared among the plurality of second cells. It may be assumed that the UE does not transmit and receive signals to and from the same cell (first cell/PCI), transmit and receive signals to and from the same TRP, and receive the same (shared/common) synchronization signal in a plurality of different second cells.

In this case, the information included in the synchronization signal may be configurable as information specific to the second cell. In this case, the second cell may be identified by using an index related to the synchronization signal. Further, the second cell may be identified by using an ID related to the TRP (an ID for identifying the TRP). In this case, the second cell may be identified by using the PCI.

In a configuration such as option 0.3.4, the maximum number of second cells in the first cell may be one. In addition, in a case where a second cell straddles the plurality of first cells, the maximum number of entire second cells may be the number of first cells/PCI (PCI group) straddled by the second cell.

Each of the above options may be selected/determined based on the above conditions/trigger (for example, conditions/triggers based on time/number of UEs/traffic, etc.).

The change/update of each option described above may be configured/indicated/notified to the UE based on at least one of system information (for example, SIB/MIB), upper layer signaling (RRC parameter/MAC CE), and DCI.

The change/update of each of the above options may be performed based on the above conditions/trigger (for example, a timer/event), or may be performed based on the implementation of the NW/UE.

The ID (for example, at least one of an ID related to a synchronization signal, an ID related to a TRP, and a PCI) in each of the above options may be a global (for example, common to all NWs) ID or a local (for example, unique in some NWs) ID.

The number of the plurality of second cells (for example, the maximum number) using at least one of the ID related to the same synchronization signal, the ID related to the same TRP, and the same PCI may be predefined in a specification, may be configured/indicated/notified to the UE by using upper layer signaling (RRC/MAC CE)/DCI, may be determined based on reporting of UE capability information, or may be determined by combining at least two of them.

### (Analysis)

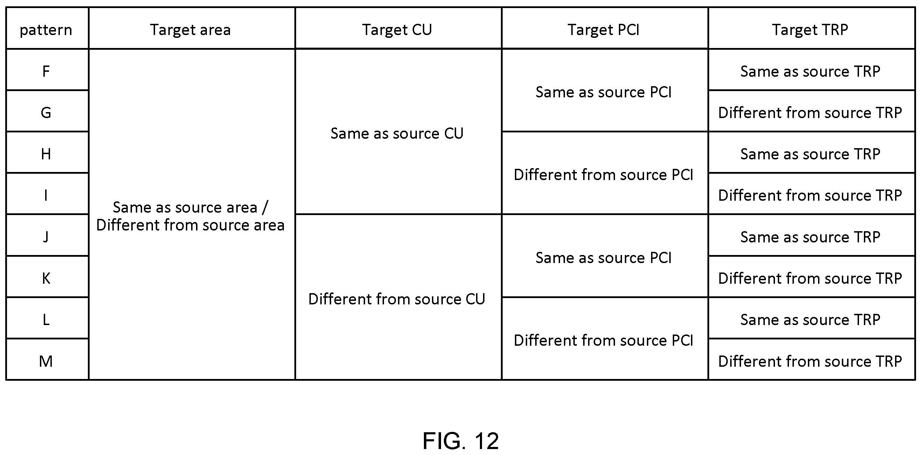

An example in Fig. 12 is considered as a mobility scenario in a future radio communication system (for example, Rel. 20 or later).

Note that, in the present disclosure, the source/serving (for example, source area/serving) may indicate the (current) object (for example, the area) before the handover. Furthermore, in the present disclosure, the target (for example, the target area) may indicate a target object (for example, the area) at the handover destination.

In Fig. 12, a pattern (patterns F to M) according to a mobility scenario in a cell-free configuration is described. The mobility scenario may be determined based on whether the target CU is the same as the source CU, whether the target PCI is the same as the source PCI, and whether the target TRP is the same as the source TRP.

In the example illustrated in Fig. 12, patterns when moving between the second cells (here, area) (that is, a case where the source area and the target area are different) or in the second cell (that is, in a case where the source area and the target area are the same) are described.

In the example illustrated in Fig. 12, pattern F is a mobility scenario in a case where the target CU is the same as the source CU, the target PCI is the same as the source PCI, and the target TRP is the same as the source TRP.

Note that, in the pattern F, it is assumed that an existing system (as defined in Rel. 18) beam management operation is used, and an operation related to a change of the second cell is used in the case of mobility between the second cells (that is, a case where the source area and the target area are different).

In the example illustrated in Fig. 12, pattern G is a mobility scenario in which the target CU is the same as the source CU, the target PCI is the same as the source PCI, and the target TRP is different from the source TRP.

Note that, in the pattern G, it is assumed that an existing system (as defined in Rel. 18) beam management operation is used, and an operation related to a change of the second cell is used in the case of mobility between the second cells (that is, a case where the source area and the target area are different).

In the example illustrated in Fig. 12, pattern H is a mobility scenario in which the target CU is the same as the source CU, the target PCI is different from the source PCI, and the target TRP is the same as the source TRP.

Note that, in pattern H, the same TRP is shared by different PCIs in intra-CU handover. In addition, in pattern H, it is assumed that the operation related to the change of the second cell is used in the case of mobility between the second cells (that is, a case where the source area and the target area are different).

In the example illustrated in Fig. 12, pattern I is a mobility scenario in which the target CU is the same as the source CU, the target PCI is different from the source PCI, and the target TRP is different from the source TRP.

In pattern I, it is assumed that the intra-CU handover operation and the operation related to the change of the second cell in the case of mobility between the second cells (that is, a case where the source area and the target area are different) are used.

In the example illustrated in Fig. 12, pattern J is a mobility scenario in which the target CU is different from the source CU, the target PCI is the same as the source PCI, and the target TRP is the same as the source TRP.

Note that, in pattern J, in the intra-CU handover, the same TRP/PCI is shared by different CUs. In addition, in pattern J, it is assumed that the operation related to the change of the second cell is used in the case of mobility between the second cells (that is, a case where the source area and the target area are different).

In the example illustrated in Fig. 12, pattern K is a mobility scenario in which the target CU is different from the source CU, the target PCI is the same as the source PCI, and the target TRP is different from the source TRP.

Note that, in pattern K, in the intra-CU handover, the same PCI is shared by different CUs. In addition, in pattern K, it is assumed that the operation related to the change of the second cell is used in the case of mobility between the second cells (that is, a case where the source area and the target area are different).

In the example illustrated in Fig. 12, pattern L is a mobility scenario in which the target CU is different from the source CU, the target PCI is different from the source PCI, and the target TRP is the same as the source TRP.

Note that, in pattern L, the same TRP is shared by different CUs/PCIs in the intra-CU handover. In addition, in pattern L, it is assumed that the operation related to the change of the second cell is used in the case of mobility between the second cells (that is, a case where the source area and the target area are different).

In the example illustrated in Fig. 12, pattern M is a mobility scenario in which the target CU is different from the source CU, the target PCI is different from the source PCI, and the target TRP is different from the source TRP.

In pattern M, it is assumed that the intra-CU handover operation and the operation related to the change of the second cell in the case of mobility between the second cells (that is, a case where the source area and the target area are different) are used.

As described above, in a future radio communication system (for example, Rel. 20 or later), a plurality of mobility scenarios are assumed, but the network (NW, e.g., base station)/UE does not sufficiently consider operations, configurations, and the like for the scenarios.

Specifically, the configuration related to the second cell (RRC configuration) and the method related to the indication/detection of the movement between the second cells are not sufficiently studied.

In addition, in the second cell (for example, in a case where PCI is the same/different between TRPs/antennas), an existing beam management framework is possible, but in a case of crossing the boundary of the second cell (for example, even in a case where the PCI is the same/different between the TRPs/antennas), a handover operation is required.

In particular, in a case where the cell-free communication is performed, it is conceivable that the signal strength from each TRP/antenna is in a uniform state at the boundary between the second cells. Therefore, there is a possibility of being affected by complicated interference at the boundary, and it is difficult to determine the handover operation only by the reception quality of the signal.

For example, in a cellular system as illustrated in Fig. 2A, quality of a signal from a source cell at a cell end is reduced, so that a target cell can be clearly determined. On the other hand, in the cell-free system as illustrated in Fig. 2B, since the area is constructed by the plurality of antennas/TRPs, the communication quality in the area becomes uniform, and the signal strength can significantly change at the boundary between the second cells, so that it is difficult to determine the handover operation.

As a method of coping with such a problem, introduction of a handover operation based on the position information of the UE has been studied, but the study is not sufficient.

In a case where these considerations are not sufficient, appropriate communication using dynamically/semi-statically changed cells/areas cannot be performed, and improvement in communication throughput may be suppressed.

Therefore, the present inventors have conceived a method for solving the above problem.

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchangeable with each other. Furthermore, in the present disclosure, "A/B/C" may mean "at least one of A, B, and C".

In the present disclosure, notify, activate, deactivate, indicate, select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, an upper layer parameter, a field, an information element (IE), a configuration, and the like may be interchangeable with each other. In the present disclosure, a Medium Access Control control element (MAC element (CE)), an update command, an activation/deactivation command, and the like may be interchangeable with each other.

In the present disclosure, the upper layer signaling may be, for example, any one of Radio Resource Control (RRC) signaling, Medium Access Control (MAC) signaling, broadcast information, other messages (a message from the core network, such as, for example, a Positioning Protocol (for example, NR Positioning Protocol A (NRPPa)/LTE Positioning Protocol (LPP)) message), or the like, or a combination thereof.

In the present disclosure, the MAC signaling may use, for example, the MAC element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, the synchronization signal, the SSB, the SS/PBCH block, and the like may be interchangeable with each other.

### (Radio Communication Method)

In the present disclosure, the PCI, the target configuration ID, the candidate cell ID, the cell ID, the ID for identifying the cell (first cell), and the like may be interchangeable with each other.

The RRC parameter/information element name and the field name of MAC CE/DCI in the present disclosure are merely examples, and are not limited to the examples shown.

The embodiments of the present disclosure can be applied without being limited to the cell-free configuration. In other words, each embodiment of the present disclosure is also applicable to a case where the cell-free configuration is not adopted.

### <Zeroth Embodiment>

In the present embodiment, the configuration of the second cell will be described.

The present embodiment is roughly divided into Embodiments 0-1 and 0-2. The following Embodiments 0-1/0-2 may be applied to the UE/NW alone or in combination.

In addition, the UE/NW may switch and apply a mode corresponding to Embodiments 0-1/0-2 below based on a certain configuration/parameter/indication.

### <<Embodiment 0-1>>

One PCI may correspond to the second cell.

The present embodiment may correspond to the above Assumption 1.

A plurality of TRPs/SSBs may correspond to one PCI.

With the configuration as in Embodiment 0-1, more flexible communication can be performed.

### [Option 0-1-1]

One second cell may be configured for the UE.

The configuration may be performed using, for example, upper layer signaling (for example, RRC signaling).

### [Option 0-1-2]

A plurality of second cells (for example, a list/set comprising a plurality of second cells) may be configured for the UE.

The plurality of second cells may be, for example, a plurality of second cells corresponding to one PCI.

The configuration may be performed using, for example, upper layer signaling (for example, RRC signaling).

### [Option 0-1-3]

For the UE, the second cell may be configured using the configuration related to the serving cell (for example, ServingCellConfig).

For example, the configuration related to the serving cell may include an ID (for example, the area ID) for identifying the second cell.

In Embodiment 0-1, the UE may be notified of the configuration related to the second cell (for example, CellFree-AreaConfig).

The configuration related to the second cell may include at least one of the following pieces of information:
· ID for identifying the second cell.
· Serving cell index.
· PCI.
· (List of) indexes related to TRPs constituting the second cell.
· (List of) indexes of reference signals (for example, SSB) constituting the second cell.

Note that the ID for identifying the second cell may indicate a unique value in the entire NW, or may have a unique value in the PCI corresponding to the second cell.

The TRP constituting the second cell and the reference signal may be associated with each other. For example, (a list of) indexes of a reference signal may be configured in a list of indexes related to TRPs.

### <<Embodiment 0-2>>

A plurality of PCIs may correspond to one second cell.

The present embodiment may correspond to the above Assumption 2.

A plurality of TRPs/SSBs may correspond to one PCI.

With the configuration as in Embodiment 0-2, the number of PCIs/SSBs corresponding to one PCI can be reduced.

### [Option 0-2-1]

One second cell may be configured for the UE.

The configuration may be performed using, for example, upper layer signaling (for example, RRC signaling).

### [Option 0-2-2]

A plurality of second cells (for example, a list/set comprising a plurality of second cells) may be configured for the UE.

The configuration may be performed using, for example, upper layer signaling (for example, RRC signaling).

### [Option 0-2-3]

For the UE, the second cell may be configured using at least one of the configuration related to the cell group (for example, CellGroupConfig) and the RRC reconfiguration (for example, RRC Reconfiguration).

For example, at least one of the configuration related to the cell group and the RRC reconfiguration may include an ID (for example, the area ID) for identifying the second cell.

In Embodiment 0-2, the UE may be notified of the configuration related to the second cell (for example, CellFree-AreaConfig).

The configuration related to the second cell may include at least one of the following pieces of information:
· ID for identifying the second cell.
· Serving cell index.
· PCI.
· (List of) indexes related to TRPs constituting the second cell.
· (List of) indexes of reference signals (for example, SSB) constituting the second cell.

Note that the ID for identifying the second cell may indicate a unique value in the entire NW, or may have a unique value in the PCI corresponding to the second cell.

The PCI corresponding to the second cell may be associated with the TRP constituting the second cell. For example, (a list of) indexes related to the TRP may be configured in (a list of) PCIs corresponding to the second cell.

The TRP constituting the second cell and the reference signal may be associated with each other. For example, (a list of) indexes of a reference signal may be configured in a list of indexes related to TRPs.

As described above, according to the zeroth embodiment, the configuration related to the second cell can be appropriately defined.

### <First Embodiment>

A first embodiment relates to movement/handover of a UE between second cells.

The UE may be configured/indicated/triggered a change/handover related to the second cell using upper layer signaling (RRC signaling/MAC CE)/DCI received from the NW (base station).

### <<Embodiment 1-1>>

The UE may be configured/indicated/triggered a change/handover related to the second cell using a certain RRC parameter.

The certain RRC parameter may be, for example, RRC reconfiguration (for example, RRC Reconfiguration).

### [Option 1-1-1]

For example, in a case where the certain RRC parameter includes the configuration related to the second cell (for example, CellFree-AreaConfig), the UE may determine to perform the change/handover related to the second cell.

Note that this option may be applied, for example, in the above options 0-1-1/0-2-1.

For example, in a case where the certain RRC parameter does not include the configuration related to the second cell (for example, CellFree-AreaConfig), the UE may determine not to perform the change/handover related to the second cell. In this case, the UE may determine to perform a change/handover related to the (existing) first cell.

### [Option 1-1-2]

For example, the certain RRC parameter may include an ID for identifying the second cell.

For example, in a case where the certain RRC parameter includes an ID for identifying the second cell, the UE may determine to perform the change/handover related to the second cell based on the ID (according to the ID).

Note that this option may be applied, for example, in the above option 0-2-3.

For example, in a case where the ID of the current second cell (for example, the serving area ID) is different from the ID of the second cell included in the certain RRC parameter, the UE may determine to perform the change/handover related to the second cell.

The UE may also receive an RRC parameter indicating whether to perform a change/handover related to the second cell. The UE may determine whether to perform the change/handover related to the second cell based on the RRC parameter.

For example, in a case where the RRC parameter indicates the first value (for example, 0 (or 1) or false), the UE may determine not to perform the change/handover related to the second cell. Further, for example, in a case where the RRC parameter indicates the second value (for example, 1 (or 0) or true), the UE may determine to perform the change/handover related to the second cell.

The RRC parameter may be included in the certain RRC parameter together with an ID for identifying the second cell.

In this option, for example, in a case where the UE determines not to perform the change/handover related to the second cell, the UE may determine to perform the change/handover related to the (existing) first cell.

### [Option 1-1-3]

For example, the certain RRC parameter may include at least one of a configuration related to a cell group (for example, CellGroupConfig) and a configuration related to a serving cell (for example, ServingCellConfig).

The configuration related to the cell group (for example, CellGroupConfig) and the configuration related to the serving cell (for example, ServingCellConfig) may be the changed configuration related to the second cell.

An ID for identifying the second cell may be included in at least one of the configuration related to the cell group (for example, CellGroupConfig) and the configuration related to the serving cell (for example, ServingCellConfig).

For example, in a case where the certain RRC parameter includes an ID for identifying the second cell, the UE may determine to perform the change/handover related to the second cell based on the ID (according to the ID).

Note that this option may be applied, for example, in the above options 0-1-3/0-2-3.

For example, in a case where the ID of the current second cell (for example, the serving area ID) is different from the ID of the second cell included in the certain RRC parameter, the UE may determine to perform the change/handover related to the second cell.

The UE may also receive an RRC parameter indicating whether to perform a change/handover related to the second cell. The UE may determine whether to perform the change/handover related to the second cell based on the RRC parameter.

For example, in a case where the RRC parameter indicates the first value (for example, 0 (or 1) or false), the UE may determine not to perform the change/handover related to the second cell. Further, for example, in a case where the RRC parameter indicates the second value (for example, 1 (or 0) or true), the UE may determine to perform the change/handover related to the second cell.

The RRC parameter may be included in the certain RRC parameter together with an ID for identifying the second cell.

In this option, for example, in a case where the UE determines not to perform the change/handover related to the second cell, the UE may determine to perform the change/handover related to the (existing) first cell.

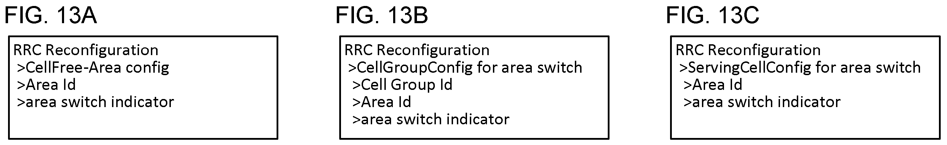

Figs. 13A to 13C are diagrams illustrating an example of configuration of the RRC parameter according to Embodiment 1-1.

In Fig. 13A, the RRC reconfiguration includes a configuration related to the second cell (CellFree-AreaConfig), an ID of the second cell (Area ID), and a parameter indicating whether to perform change/handover related to the second cell (area switch indicator).

In Fig. 13A, the RRC reconfiguration includes the configuration (CellFree-AreaConfig) related to the second cell in correspondence with the above option 1-1-1, and the RRC reconfiguration includes the ID (Area ID) of the second cell and the parameter (area switch indicator) indicating whether to perform the change/handover related to the second cell in correspondence with the above option 1-1-1.

Fig. 13B illustrates an example in which the RRC reconfiguration includes the cell group configuration (CellGroupConfig) for changing the second cell (area). Then, the cell group configuration (CellGroupConfig) includes a cell group ID, an ID (Area ID) of the second cell, and a parameter (area switch indicator) indicating whether to perform change/handover related to the second cell.

In Fig. 13B, the cell group configuration (CellGroupConfig) is included in the RRC reconfiguration corresponding to the above option 1-1-3, and the cell group configuration includes the ID (Area ID) of the second cell and the parameter (area switch indicator) indicating whether to perform the change/handover related to the second cell corresponding to the above option 1-1-3.

Fig. 13C illustrates an example in which the RRC reconfiguration includes the serving cell configuration (ServingCellConfig) of the second cell (area). Then, the serving cell configuration (ServingCellConfig) includes an ID (Area ID) of the second cell and a parameter (area switch indicator) indicating whether to perform the change/handover related to the second cell.

In Fig. 13C, the RRC reconfiguration includes a serving cell configuration (ServingCellConfig) corresponding to the above option 1-1-3, and the serving cell configuration includes an ID (Area ID) of the second cell and a parameter (area switch indicator) indicating whether to perform the change/handover related to the second cell corresponding to the above option 1-1-3.

According to Embodiment 1-1 described above, it is possible to appropriately trigger the change/handover related to the second cell using the configuration by the RRC.

### <<Embodiment 1-2>>

The UE may be configured/indicated/triggered a change/handover related to the second cell using a certain MAC CE.

The MAC CE may be, for example, a new MAC CE (as defined in Rel. 20 and later), or a MAC CE in which a MAC CE for L1L2-triggered mobility (LTM) defined in Rel. 18 is extended.

### [Option 1-2-1]

The MAC CE may include a field related to an ID for identifying the second cell.

The UE may determine to make the change/handover related to the second cell based on (according to) the field.

The field may be included in the MAC CE in addition to/instead of the ID of the target configuration (configuration of the handover destination).

Note that this option may be applied, for example, in the above options 0-1-2/0-2-2.

The ID of the second cell that can be indicated by the MAC CE may be IDs of a plurality of (for example, all) second cells that are preset by using RRC signaling, or may be an ID of at least one second cell indicated by another MAC CE (for example, the MAC CE for activation of the TCI state) that is received in advance.

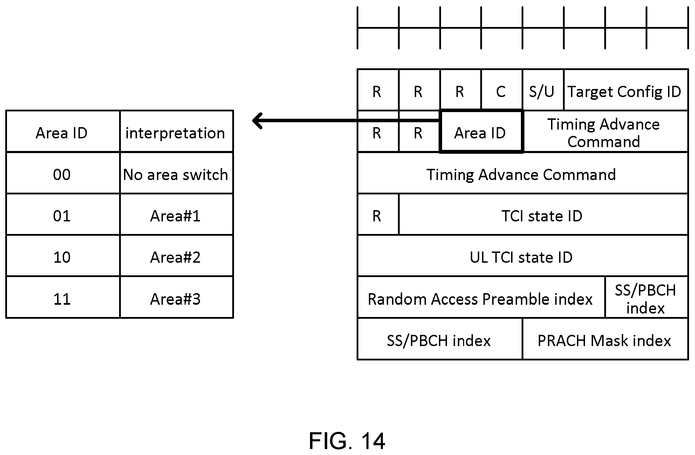

Fig. 14 is a diagram illustrating an example of an indication by the MAC CE according to option 1-2-1. In Fig. 14, a MAC CE in which the MAC CE for the LTM is extended is described.

The MAC CE illustrated in Fig. 14 includes at least a target configuration ID field (Target Config ID) and an area ID field (Area ID). Note that, in the example illustrated in Fig. 14, a case where there are three area candidates configured for the UE is described, and an example in which the area ID field is 2 bits is illustrated. The area ID field may be determined based on the number of area candidates configured for the UE.

The UE may determine whether to perform the area change based on the value of the area ID field included in the MAC CE as illustrated in Fig. 14. For example, in a case where the field indicates "00", the UE may determine not to perform the area change, and in a case where the field indicates "01", "10", and "11", the UE may determine to perform the area change to "area #1", "area #2", and "area #3", respectively.

Note that, in the diagram related to the MAC CE in the present disclosure, the field name, the number of bits, and the field position are merely examples, and are not limited to these examples.

In this option, for example, in a case where the UE determines not to perform the change/handover related to the second cell, the UE may determine to perform the change/handover related to the (existing) first cell.

### [Option 1-2-2]

The MAC CE may include a target configuration ID and a field indicating whether to perform a change/handover related to the second cell.

For example, in a case where the field indicates a first value (for example, 0 (or 1)), the UE may determine not to perform a change/handover related to the second cell. Further, for example, in a case where the field indicates the second value (for example, 1 (or 0)), the UE may determine to perform the change/handover related to the second cell based on the target configuration ID.

The target configuration identified by the target configuration ID may include an ID for identifying the second cell. The UE may perform a change/handover related to the second cell based on the ID for identifying the second cell.

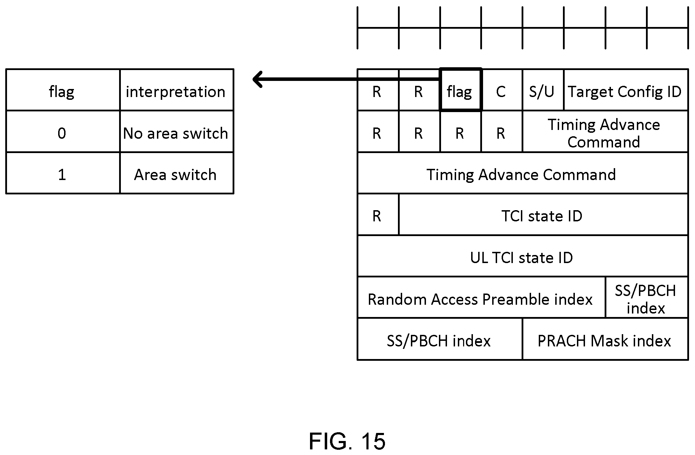

Fig. 15 is a diagram illustrating an example of an indication by the MAC CE according to option 1-2-2. In Fig. 15, a MAC CE in which the MAC CE for the LTM is extended is described.

The MAC CE illustrated in Fig. 15 includes at least a target configuration ID field (Target Config ID) and a field (flag) indicating whether to perform change/handover related to the second cell.

The UE may determine whether to perform the area change based on the value of the flag field included in the MAC CE as illustrated in Fig. 15. For example, in a case where the field indicates "0", the UE may determine not to perform the area change, and in a case where the field indicates "1", the UE may determine to perform the area change to the area corresponding to the target configuration ID.

In this option, for example, in a case where the UE determines not to perform the change/handover related to the second cell, the UE may determine to perform the change/handover related to the (existing) first cell.

### [Option 1-2-3]

The MAC CE may include a target configuration ID.

The UE may determine whether to perform a change/handover related to the second cell based on the target configuration identified by the target ID.

This option may be applied, for example, in combination with the operation of options 1-1-1/1-1-2/1-1-3 described above.

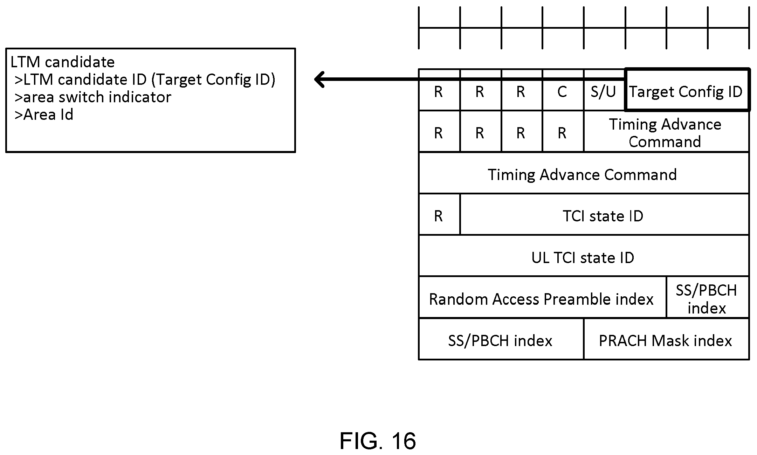

Fig. 16 is a diagram illustrating an example of an indication by the MAC CE according to option 1-2-3. In Fig. 16, a MAC CE in which the MAC CE for the LTM is extended is described.

The MAC CE illustrated in Fig. 16 includes at least a target configuration ID field (Target Config ID). Furthermore, as illustrated in Fig. 16, the target configuration ID may be associated with an ID (for example, the LTM candidate ID) for identifying the RRC parameter related to the LTM candidate. The RRC parameter related to the LTM candidate may include an LTM candidate ID, a parameter (for example, the area change indicator) indicating whether to perform change/handover related to the second cell, and an ID (area ID) of the second cell.

The UE may determine whether to perform the area change according to the configuration of the LTM candidate associated with the target configuration ID based on the value of the target configuration ID included in the MAC CE as illustrated in Fig. 16.

In this option, for example, in a case where the UE determines not to perform the change/handover related to the second cell, the UE may determine to perform the change/handover related to the (existing) first cell.

### [Option 1-2-4]

The MAC CE may include a target configuration ID.

Furthermore, the UE may be notified of at least one of the ID of the TCI state (joint/UL/DL TCI state), the timing advance (TA) value, and the random access (Contention Free Random Access (CFRA)) resource/SSB index/random access preamble index by using the MAC CE.

In a case where the ID of the second cell associated with at least one of the ID of the TCI state (joint/UL/DL TCI state), the TA value, and the random access (Contention Free Random Access (CFRA)) resource/SSB index/random access preamble index is different from the ID of the current second cell (serving area), the UE may determine to perform the change/handover related to the second cell.

A target configuration ID and a handover/LTM candidate may be associated. The handover/LTM candidates may include at least one of an RRC configuration related to a TCI state (joint/UL/DL TCI state), an RRC configuration related to a TA value, and an RRC configuration related to a random access (CFRA) resource. The ID of the second cell may be included in at least one of the RRC configuration related to the TCI state (joint/UL/DL TCI state), the RRC configuration related to the TA value, and the RRC configuration related to the random access (CFRA) resource.

The UE may also receive an RRC parameter indicating whether to perform a change/handover related to the second cell. The UE may determine whether to perform the change/handover related to the second cell based on the RRC parameter.

For example, in a case where the RRC parameter indicates the first value (for example, 0 (or 1) or false), the UE may determine not to perform the change/handover related to the second cell. Further, for example, in a case where the RRC parameter indicates the second value (for example, 1 (or 0) or true), the UE may determine to perform the change/handover related to the second cell.

The RRC parameter indicating whether to perform the change/handover related to the second cell may be included in the RRC parameter related to the handover/LTM candidate/candidate TCI state, or may be associated with any parameter included in the RRC parameter related to the handover/LTM candidate/candidate TCI state.

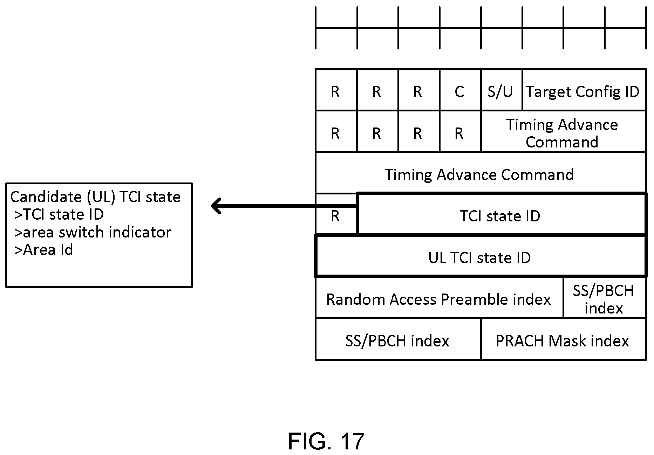

Fig. 17 is a diagram illustrating an example of an indication by the MAC CE according to option 1-2-4. In Fig. 17, a MAC CE in which the MAC CE for the LTM is extended is described.

The MAC CE illustrated in Fig. 17 includes at least a target configuration ID field (Target Config ID) and a TCI state ID field (TCI state ID)/ULTCI state ID field (UL TCI state ID). The target configuration ID may be associated with an ID (for example, the LTM candidate ID) for identifying the RRC parameter related to the LTM candidate.

In addition, as illustrated in Fig. 17, the RRC parameter related to the candidate TCI state/the candidate UL TCI state may include a TCI state ID, a parameter (for example, the area change indicator) indicating whether to perform change/handover related to the second cell, and an ID (area ID) of the second cell. The RRC parameter for the candidate TCI state/candidate UL TCI state may be included in the RRC parameter for the LTM candidate. For example, a parameter related to a list of TCI states is included in the LTM candidate, and the parameter related to the TCI state ID indicated by the list of TCI states may refer to the RRC parameter related to the candidate TCI state/the candidate UL TCI state.

The UE may determine whether to perform the area change according to the TCI state in the configuration of the LTM candidate associated with the target configuration ID based on the value of the target configuration ID included in the MAC CE as illustrated in Fig. 17 and the indicated TCI state ID.

For example, the UE determines the TCI state/UL TCI state indicated by the TCI state list in the LTM candidate configuration associated with the target configuration ID indicated by the MAC CE, and determines whether to perform the area change based on the RRC parameter for the candidate TCI state/candidate UL TCI state including the ID of the TCI state/UL TCI state. The RRC parameter related to the candidate TCI state/candidate UL TCI state may include an ID of the TCI state/UL TCI state, a parameter (for example, the area change indicator) indicating whether to perform change/handover related to the second cell, and an ID (area ID) of the second cell.

In this option, for example, in a case where the UE determines not to perform the change/handover related to the second cell, the UE may determine to perform the change/handover related to the (existing) first cell.

According to Embodiment 1-2 described above, the change/handover related to the second cell can be appropriately triggered using the configuration by the RRC and the indication by the MAC CE.

### <<Embodiment 1-3>>

The UE may be configured/indicated/triggered a change/handover related to the second cell using at least one of the certain MAC CE and the certain DCI.

The MAC CE may be, for example, a new MAC CE (defined in Rel. 20 and later), a MAC CE in which a MAC CE defined in Rel. 18 is extended, or a MAC CE defined until Rel. 18.

The UE may perform activation/deactivation of the TCI state using at least one of the certain MAC CE and the certain DCI. The UE may be indicated the TCI state by using at least one of the certain MAC CE and the certain DCI.

### [Option 1-3-1]

The certain MAC CE/DCI may include a field of an ID for identifying the second cell.

The UE may perform a change/handover related to the second cell based on the value of the field of the ID.

The ID of the second cell that can be indicated by the MAC CE may be IDs of a plurality of (for example, all) second cells that are preset by using RRC signaling, or may be an ID of at least one second cell indicated by another MAC CE (for example, the MAC CE for activation of the TCI state) that is received in advance.

The UE may determine to use the indicated TCI state after the change of the second cell.

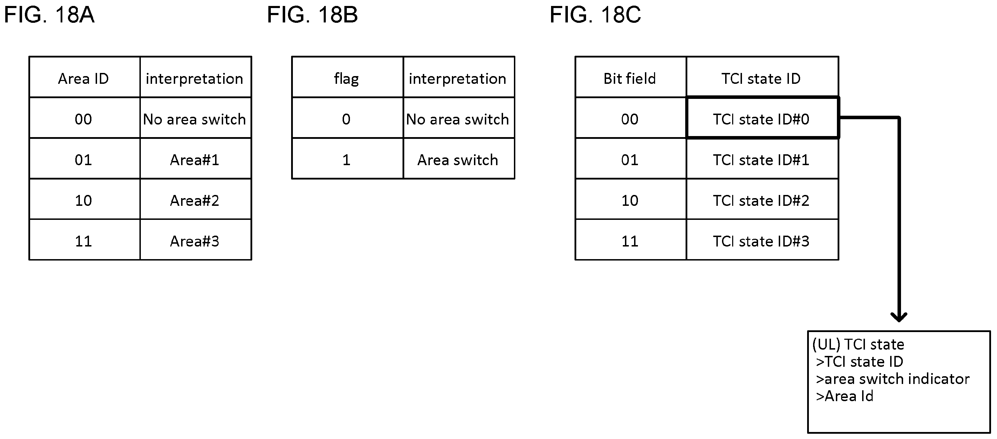

Fig. 18A is a diagram illustrating an example of an indication field according to option 1-3-1. The UE may determine whether to perform the area change based on the value of the indication field included in the certain MAC CE/DCI as illustrated in Fig. 18A. For example, in a case where the field indicates "00", the UE may determine not to perform the area change, and in a case where the field indicates "01", "10", and "11", the UE may determine to perform the area change to "area #1", "area #2", and "area #3", respectively.

In this option, for example, in a case where the UE determines not to perform the change/handover related to the second cell, the UE may determine to perform the change/handover related to the (existing) first cell.

### [Option 1-3-2]

A field indicating whether to perform a change/handover related to the second cell may be included in a certain MAC CE/DCI.

For example, in a case where the field indicates a first value (for example, 0 (or 1)), the UE may determine not to perform a change/handover related to the second cell. Further, for example, in a case where the field indicates the second value (for example, 1 (or 0)), the UE may determine to perform the change/handover related to the second cell.

The indicated TCI state and the second cell may be associated. The UE may determine whether to perform a change/handover to the second cell to be associated with the indicated TCI state based on the indicated TCI state and a field indicating whether to perform a change/handover with respect to the second cell.

Fig. 18B is a diagram illustrating an example of an indication field according to option 1-3-2. The UE may determine whether to perform the area change based on the value of the indication field included in the certain MAC CE/DCI as illustrated in Fig. 18B. For example, in a case where the field indicates "0", the UE may determine not to perform the area change, and in a case where the field indicates "1", the UE may determine to perform the area change to the area related to the indicated TCI state.

In this option, for example, in a case where the UE determines not to perform the change/handover related to the second cell, the UE may determine to perform the change/handover related to the (existing) first cell.

### [Option 1-3-3]

The UE may determine whether to perform a change/handover related to the second cell based on the TCI state indicated using the certain MAC CE/DCI.

For example, the UE may determine to perform the change/handover related to the second cell in a case where the ID of the second cell associated with the indicated TCI state (TCI state ID) is different from the ID of the current second cell (serving area ID).

The RRC parameter for the TCI state for the serving cell/area may include the ID of the second cell.

The UE may also receive an RRC parameter indicating whether to perform a change/handover related to the second cell. The UE may determine whether to perform the change/handover related to the second cell based on the RRC parameter.

For example, in a case where the RRC parameter indicates the first value (for example, 0 (or 1) or false), the UE may determine not to perform the change/handover related to the second cell. Further, for example, in a case where the RRC parameter indicates the second value (for example, 1 (or 0) or true), the UE may determine to perform the change/handover related to the second cell.

The RRC parameter indicating whether to perform the change/handover related to the second cell may be included in the RRC parameter related to the TCI state, or may be associated with any parameter included in the RRC parameter related to the TCI state.

Fig. 18C is a diagram illustrating an example of an indication field according to option 1-3-3. The UE may determine whether to perform the area change based on the value of the indication field included in the certain MAC CE/DCI as illustrated in Fig. 18C.

For example, in a case where the field indicates "00", the UE may refer to the RRC parameter corresponding to the TCI state ID#0, and determine whether to perform the area change to the corresponding area based on the area change indicator and the area ID included in the RRC parameter.

In this option, for example, in a case where the UE determines not to perform the change/handover related to the second cell, the UE may determine to perform the change/handover related to the (existing) first cell.

According to Embodiment 1-3, the change/handover related to the second cell can be appropriately triggered using the indication by the MAC CE/DCI.

As described above, according to the first embodiment, the change/handover related to the second cell can be appropriately performed based on the notification from the NW.

### <Second Embodiment>

A second embodiment relates to movement/handover of a UE between second cells.

The UE may determine whether to perform a change/handover related to the second cell based on a certain condition.

### <<Embodiment 2-1>>

The UE may be configured the certain condition using a certain RRC parameter.

The certain RRC parameter may be, for example, RRC reconfiguration (for example, RRC Reconfiguration).

The UE may be configured an event related to a trigger of a change/handover related to the second cell using the certain RRC parameter. The UE may determine whether to perform a change/handover related to the second cell based on the configured event.

In addition, the UE may determine whether to perform the change/handover related to the second cell based on an event related to a trigger of the change/handover related to the second cell defined in the specification in advance.

The event may be a common event for a plurality of (for example, all) UEs/second cells, for example. Furthermore, the event may be, for example, a unique event for each UE/second cell.

### [Option 2-1-1]

For example, in a case where an event related to a trigger of a change/handover for a second cell is satisfied and the certain RRC parameter includes a configuration (for example, CellFree-AreaConfig) related to the second cell, the UE may determine to perform the change/handover related to the second cell.

Note that this option may be applied, for example, in the above options 0-1-1/0-2-1.

For example, in a case where the certain RRC parameter does not include the configuration related to the second cell (for example, CellFree-AreaConfig), the UE may determine not to perform the change/handover related to the second cell. In this case, the UE may determine to perform a change/handover related to the (existing) first cell.

### [Option 2-1-2]

For example, an ID for identifying the second cell may be included in the certain RRC parameter or an arbitrary parameter included in the certain RRC parameter.

The arbitrary parameter included in the certain RRC parameter may be, for example, at least one of a parameter related to conditional reconfiguration (for example, ConditionalReconfiguration), a measurement configuration (for example, MeasConfig), a CSI report configuration (for example, CSI report Config), and a CSI resource configuration (for example, CSI resource Config).

For example, in a case where the event related to a trigger of the change/handover related to the second cell is satisfied and the certain RRC parameter includes the ID for identifying the second cell, the UE may determine to perform the change/handover related to the second cell based on the ID (according to the ID).

Note that this option may be applied, for example, in the above option 0-2-3.

For example, in a case where the ID of the current second cell (for example, the serving area ID) is different from the ID of the second cell included in the certain RRC parameter, the UE may determine to perform the change/handover related to the second cell.

The UE may also receive an RRC parameter indicating whether to perform a change/handover related to the second cell. The UE may determine whether to perform the change/handover related to the second cell based on the RRC parameter.

For example, in a case where the RRC parameter indicates the first value (for example, 0 (or 1) or false), the UE may determine not to perform the change/handover related to the second cell. Further, for example, in a case where the RRC parameter indicates the second value (for example, 1 (or 0) or true), the UE may determine to perform the change/handover related to the second cell.

The RRC parameter may be included in the certain RRC parameter together with an ID for identifying the second cell.

In this option, for example, in a case where the UE determines not to perform the change/handover related to the second cell, the UE may determine to perform the change/handover related to the (existing) first cell.

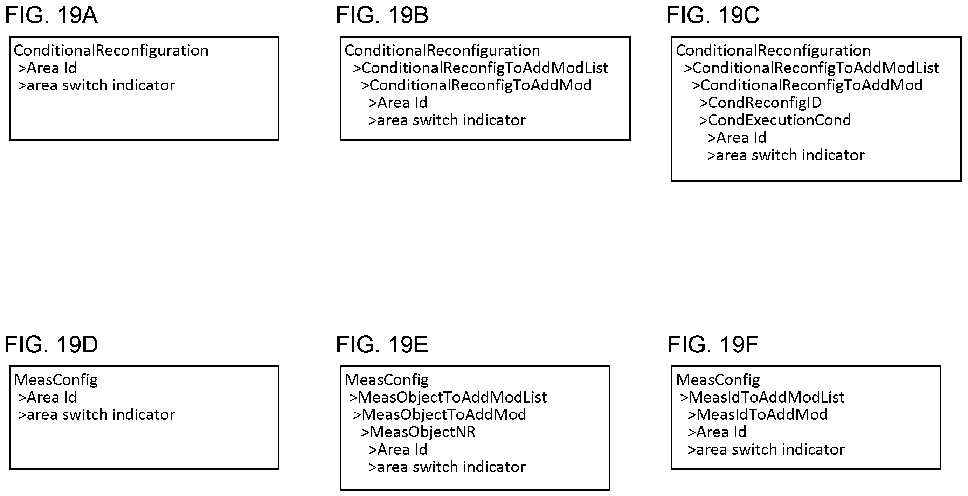

Figs. 19A to 19F are diagrams illustrating an example of configuration of an RRC parameter according to option 2-1-2.

In the example illustrated in Fig. 19A, the conditional reconfiguration (ConditionalReconfiguration) includes the ID (Area ID) of the second cell and the parameter (area switch indicator) indicating whether to perform the change/handover related to the second cell.

In the example illustrated in Fig. 19B, the ID (Area ID) of the second cell and the parameter (area switch indicator) indicating whether to perform the change/handover related to the second cell are included in the list of conditional reconfiguration (CondReconfigToAddModList).

In the example illustrated in Fig. 19C, the parameter (condExecutionCond) related to the execution condition of the conditional reconfiguration in the conditional reconfiguration list (CondReconfigToAddModList) includes the ID (Area ID) of the second cell and the parameter (area switch indicator) indicating whether to perform the change/handover related to the second cell.

In the example illustrated in Fig. 19D, the measurement configuration (MeasConfig) includes an ID (Area ID) of the second cell and a parameter (area switch indicator) indicating whether to perform the change/handover related to the second cell.

In the example illustrated in Fig. 19E, the parameter (MeasObjectNR) of a measurement object included in the list (MeasObjectToAddModList) of the measurement objects in the measurement configuration (MeasConfig) includes the ID (Area ID) of the second cell and the parameter (area switch indicator) indicating whether to perform the change/handover related to the second cell.

In the example illustrated in Fig. 19F, the list of measurement IDs (MeasIDToAddModList) in the measurement configuration (MeasConfig) includes an ID (Area ID) of the second cell and a parameter (area switch indicator) indicating whether to perform change/handover related to the second cell.

### [Option 2-1-3]

For example, at least one of a configuration related to a cell group (for example, CellGroupConfig) and a configuration related to a serving cell (for example, ServingCellConfig) may be included in the certain RRC parameter or an arbitrary parameter included in the certain RRC parameter.

An arbitrary parameter included in the certain RRC parameter may be a parameter (for example, ConditionalReconfiguration) related to conditional reconfiguration related to the target cell/area.

The certain RRC parameter may be included in conditional RRC reconfiguration (for example, CondRRCReconfig).

The configuration related to the cell group (for example, CellGroupConfig) and the configuration related to the serving cell (for example, ServingCellConfig) may be the changed configuration related to the second cell.

An ID for identifying the second cell may be included in at least one of the configuration related to the cell group (for example, CellGroupConfig) and the configuration related to the serving cell (for example, ServingCellConfig).

For example, in a case where the event related to a trigger of the change/handover related to the second cell is satisfied and the certain RRC parameter includes the ID for identifying the second cell, the UE may determine to perform the change/handover related to the second cell based on the ID (according to the ID).

Note that this option may be applied, for example, in the above options 0-1-3/0-2-3.

For example, in a case where the ID of the current second cell (for example, the serving area ID) is different from the ID of the second cell included in the certain RRC parameter, the UE may determine to perform the change/handover related to the second cell.

The UE may also receive an RRC parameter indicating whether to perform a change/handover related to the second cell. The UE may determine whether to perform the change/handover related to the second cell based on the RRC parameter.

For example, in a case where the RRC parameter indicates the first value (for example, 0 (or 1) or false), the UE may determine not to perform the change/handover related to the second cell. Further, for example, in a case where the RRC parameter indicates the second value (for example, 1 (or 0) or true), the UE may determine to perform the change/handover related to the second cell.

The RRC parameter may be included in the certain RRC parameter together with an ID for identifying the second cell.

In this option, for example, in a case where the UE determines not to perform the change/handover related to the second cell, the UE may determine to perform the change/handover related to the (existing) first cell.

Note that the configuration/parameter related to RRC in the present embodiment may be configured in at least one of the configuration/parameter related to the L1 UE triggered measurement report, the configuration/parameter related to the conditional LTM (Rel. 19), the configuration/parameter related to the L3 UE triggered measurement report, and the configuration/parameter related to the conditional handover (Rel. 16).

According to Embodiment 2-1 described above, it is possible to appropriately determine the change/handover related to the second cell using the configuration by the RRC.

### <<Embodiment 2-2>>

The UE may perform at least one of the change/handover reporting and the beam reporting on the second cell by using the certain MAC CE.

The MAC CE may be, for example, a new MAC CE (defined in Rel. 20 and later), a MAC CE in which the MAC CE of the L1/L3 UE triggered beam report is extended, or a MAC CE in which the MAC CE for the LTM is extended (Rel. 19).

### [Option 2-2-1]

The MAC CE may include a field related to an ID for identifying the second cell.

The UE may use the field to report that the change/handover related to the second cell is to be performed on the second cell corresponding to the field value.

Note that this option may be applied, for example, in the above options 0-1-2/0-2-2.

The ID of the second cell that can be reported by the MAC CE may be IDs of a plurality of (for example, all) second cells that are preset by using RRC signaling, or may be an ID of at least one second cell indicated by another MAC CE (for example, the MAC CE for activation of the TCI state) that is received in advance.

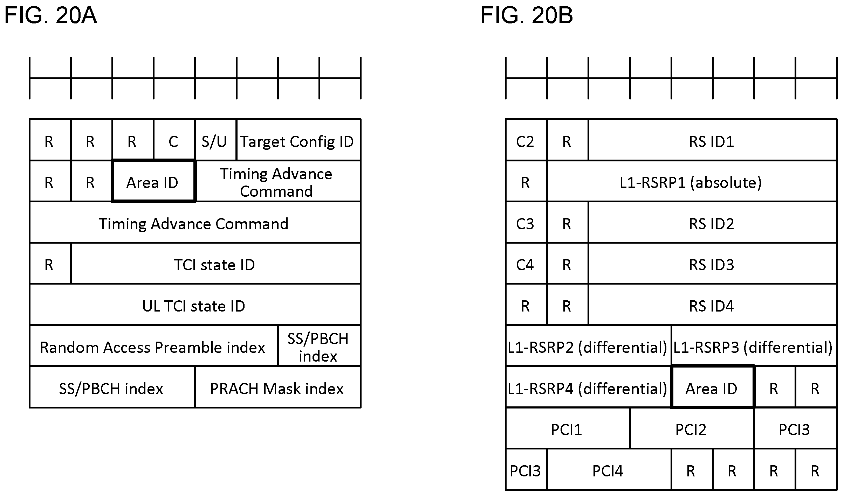

Fig. 20A is a diagram illustrating an example of an indication by the MAC CE according to option 2-2-1. In Fig. 20A, a MAC CE in which the MAC CE for the LTM is extended is described.

The MAC CE illustrated in Fig. 20A includes at least a target configuration ID field (Target Config ID) and an area ID field (Area ID).

The UE may use the value of the area ID field included in the MAC CE as illustrated in Fig. 20A to report that the area change is performed for the area corresponding to the field.

Fig. 20B is a diagram illustrating another example of the indication by the MAC CE according to option 2-2-1. In Fig. 20B, a MAC CE in which a MAC CE for beam reporting is extended is described.

The MAC CE illustrated in Fig. 20B includes at least an area ID field (Area ID).

The UE may use the value of the area ID field included in the MAC CE as illustrated in Fig. 20B to report that the area change is performed for the area corresponding to the field.

In this option, for example, in a case where the UE determines not to perform the change/handover related to the second cell, the UE may report that the change/handover related to the (existing) first cell is performed.

### [Option 2-2-2]

A field indicating whether to perform a change/handover related to the second cell may be included in the MAC CE.

For example, in a case where the field indicates a first value (for example, 0 (or 1)), it may mean that the UE does not perform a change/handover related to the second cell. Furthermore, for example, in a case where the field indicates a second value (for example, 1 (or 0)), it may mean that the UE performs a change/handover related to the second cell.

The UE may report at least one of a target cell/area configuration (target configuration) and a target reference signal (RS) configuration. The UE may make a change/handover related to the second cell to the second cell included in at least one of the reported target cell/area configuration and the target reference signal configuration.

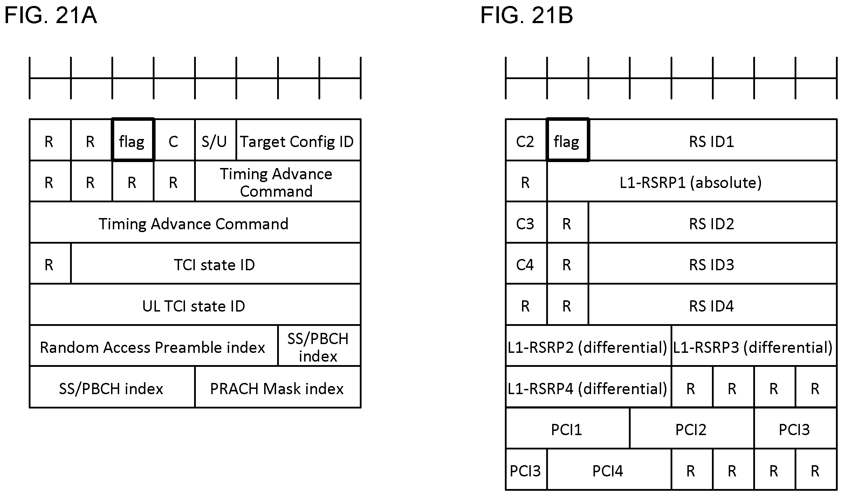

Fig. 21A is a diagram illustrating an example of an indication by the MAC CE according to option 2-2-2. Fig. 21A illustrates a MAC CE in which the MAC CE for the LTM is extended.

The MAC CE illustrated in Fig. 21A includes at least a target configuration ID field (Target Config ID) and a field (flag) indicating whether to perform change/handover related to the second cell.

The UE may use the value of the flag field included in the MAC CE as illustrated in Fig. 21A and the value of the target configuration ID to report whether to perform the area change for the area corresponding to the target configuration ID.

Fig. 21B is a diagram illustrating another example of the indication by the MAC CE according to option 2-2-2. In Fig. 21B, a MAC CE in which a MAC CE for beam reporting is extended is described.

The MAC CE illustrated in Fig. 21B includes a field (flag) indicating whether to perform a change/handover related to at least the second cell.

The UE may use the value of the area ID field included in the MAC CE as illustrated in Fig. 21B to report whether to perform area change for the area corresponding to the RS ID (for example, the RS ID corresponding to the best receive quality) reference signal included in the MAC CE.

In this option, for example, in a case where the UE determines not to perform the change/handover related to the second cell, the UE may report that the change/handover related to the (existing) first cell is performed.

### [Option 2-2-3]

The MAC CE may include a target configuration ID.

The UE may report whether to perform the change/handover related to the second cell based on at least one of the target configuration identified by the target ID and the PCI.

For example, the UE may report whether to perform a change/handover related to the second cell based on the ID of the second cell associated with the target configuration/PCI.

This option may be applied, for example, in combination with the above options 2-1-1/2-1-2/2-1-3.

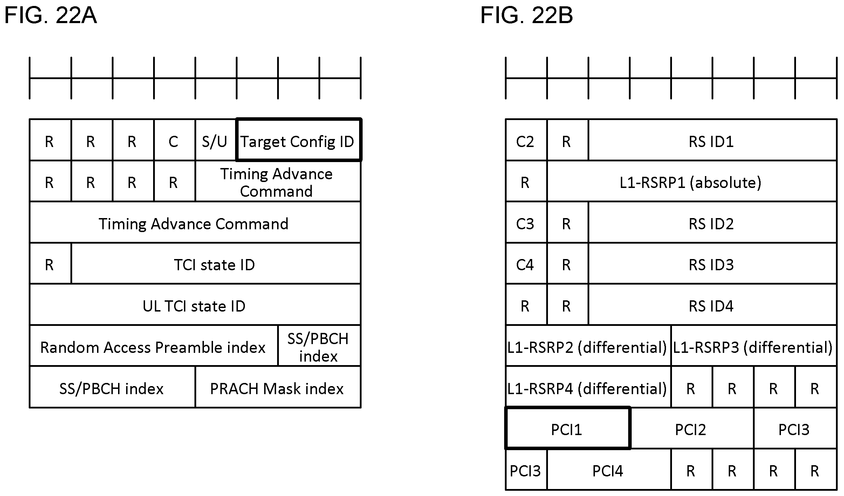

Fig. 22A is a diagram illustrating an example of an indication by the MAC CE according to option 2-2-3. Fig. 22A illustrates a MAC CE in which the MAC CE for the LTM is extended.

The MAC CE illustrated in Fig. 22A includes at least a target configuration ID field (Target Config ID).

The UE may report whether to perform the area change using the value of the target configuration ID included in the MAC CE as illustrated in Fig. 22A and the area ID associated with the target configuration ID.

Fig. 22B is a diagram illustrating another example of the indication by the MAC CE according to option 2-2-3. In Fig. 22B, a MAC CE in which a MAC CE for beam reporting is extended is described.

At least the PCI field (PCI) is included in the MAC CE illustrated in Fig. 22B.

The UE may report whether to perform the area change for the area associated with the PCI using the value (for example, PCI1) of the PCI field included in the MAC CE as illustrated in Fig. 22B.

In this option, for example, in a case where the UE determines not to perform the change/handover related to the second cell, the UE may report that the change/handover related to the (existing) first cell is performed.

### [Option 2-2-4]

The MAC CE may include a target configuration ID.

In addition, the UE may report at least one of an ID of a TCI state (joint/UL/DL TCI state), a timing advance (TA) value, a random access (CFRA) resource/SSB index/random access preamble index, an RS index, and a PCI using the MAC CE.

The target configuration ID to be reported and the LTM candidate may be associated.

The ID of the second cell may be included in at least one configuration of the ID of the TCI state (joint/UL/DL TCI state), the TA value, and the random access (CFRA) resource/SSB index/random access preamble index associated with the LTM candidate (included in the LTM candidate).

The ID of the second cell may also be included in the CSI reporting configuration/CSI resource configuration associated with the reported PCI/RS index.

In a case where the ID of the second cell associated with at least one of the ID of the TCI state (joint/UL/DL TCI state), the TA value, the random access (CFRA) resource/SSB index/random access preamble index, the RS index, and the PCI is different from the ID of the current second cell (serving area), the NW may determine that the UE performs a change/handover related to the second cell.

The UE may also transmit an RRC parameter indicating whether to perform a change/handover related to the second cell. The NW may determine whether the UE performs the change/handover related to the second cell based on the RRC parameter.

For example, in a case where the RRC parameter indicates the first value (for example, 0 (or 1) or false), the NW may determine that the UE does not perform the change/handover related to the second cell. Further, for example, in a case where the RRC parameter indicates the second value (for example, 1 (or 0) or true), the NW may determine that the UE performs the change/handover related to the second cell.

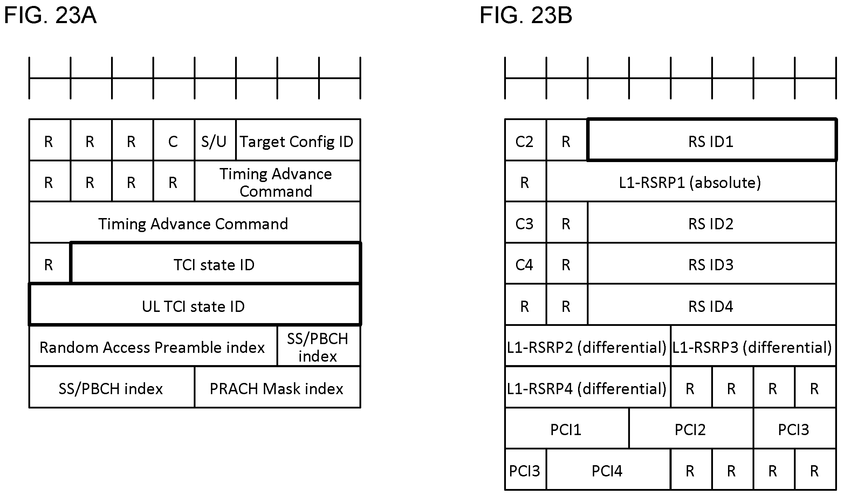

Fig. 23A is a diagram illustrating an example of an indication by the MAC CE according to option 2-2-4. Fig. 23A illustrates a MAC CE in which the MAC CE for the LTM is extended.

The MAC CE illustrated in Fig. 23A includes at least a target configuration ID field (Target Config ID) and a TCI state ID field (TCI state ID)/ULTCI state ID field (UL TCI state ID). The target configuration ID may be associated with an ID (for example, the LTM candidate ID) for identifying the RRC parameter related to the LTM candidate.

The UE may report whether to perform the area change for the area corresponding to the target configuration ID/TCI state ID by using the value of the target configuration ID included in the MAC CE as illustrated in Fig. 23A and the TCI state ID.

Fig. 23B is a diagram illustrating another example of the indication by the MAC CE according to option 2-2-4. In Fig. 23B, a MAC CE in which a MAC CE for beam reporting is extended is described.

The MAC CE illustrated in Fig. 23B includes at least an RS ID field (RS ID).

The UE may report whether to perform the area change by using a value of an RS ID field (for example, RS ID1) included in the MAC CE as illustrated in Fig. 23B.

In this option, for example, in a case where the UE determines not to perform the change/handover related to the second cell, the UE may determine to perform the change/handover related to the (existing) first cell.

It should be noted that in at least one of the above described options 2-2-1 to 2-2-4, when CSI for a plurality of PCIs is reported, the UE may report the area change using a certain PCI/RS ID.

The certain PCI/RS ID may be, for example, a PCI/RS ID of best quality (RSRP/SINR), a first PCI/RS ID, or a PCI/RS ID corresponding to quality reported using an absolute value (for example, a certain number of bits (for example, 7 bits)).

Note that in at least one of the above described options 2-2-1 to 2-2-4, when CSI of a plurality of PCIs is reported, the UE may use a bit (for example, 1 bit) indicating a PCI/RS ID for area change to report to which area the area change is to be made.

According to Embodiment 2-2 described above, it is possible to appropriately report the change/handover related to the second cell using the MAC CE.

### <<Embodiment 2-3>>

The UE may perform at least one of the change/handover reporting and the beam reporting on the second cell by using the certain UCI.

### [Option 2-3-1]

The certain UCI may include a field of an ID for identifying the second cell.

The UE may use the field of the ID to report that the change/handover related to the second cell is to be performed on the second cell corresponding to the field value.

The ID of the second cell that can be reported by the UCI may be IDs of a plurality of (for example, all) second cells that are preset by using RRC signaling, or may be an ID of at least one second cell indicated by another MAC CE (for example, the MAC CE for activation of the TCI state) that is received in advance.

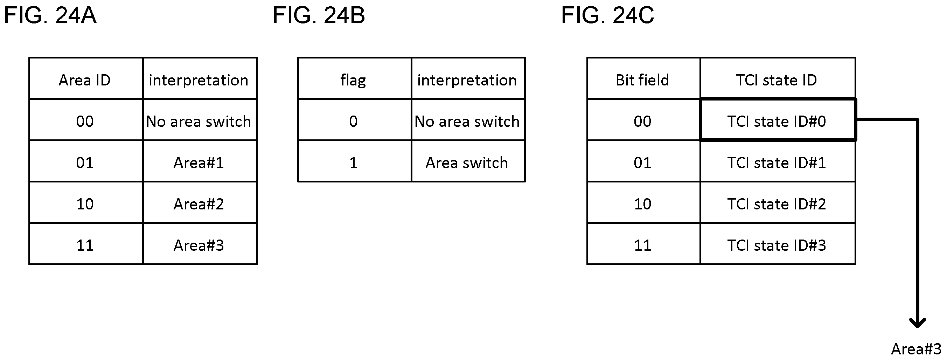

Fig. 24A is a diagram illustrating an example of an indication field according to option 2-3-1. The UE may report, by using a value of the indication field included in the certain UCI, whether to perform the area change, as illustrated in Fig. 24A. For example, in a case where the field indicates "00", the UE may report that the area change is not performed, and in a case where the field indicates "01", "10", and "11", the UE may report that the area change is performed to "area #1", "area #2", and "area #3", respectively.

In this option, for example, in a case where the UE determines not to perform the change/handover related to the second cell, the UE may report that the change/handover related to the (existing) first cell is performed.

### [Option 2-3-2]

A field indicating whether to perform a change/handover related to the second cell may be included in a certain UCI.

For example, in a case where the field indicates a first value (for example, 0 (or 1)), it may mean that a change/handover related to the second cell is not performed. Furthermore, for example, in a case where the field indicates a second value (for example, 1 (or 0)), it may mean that a change/handover related to the second cell is performed.

The UE may report the cell ID (PCI)/RS ID to the NW. The ID of the second cell may be associated with an RRC parameter associated with a cell ID (PCI)/RS ID.

The NW may determine the second cell to which the UE performs a change/handover based on the ID of the second cell associated with the reported cell ID/RS ID.

It should be noted that the UE may report the ID to be changed of the second cell by using at least one method described in the above option 2-3-1.

Fig. 24B is a diagram illustrating an example of an indication field according to option 2-3-2. The UE may report, by using a value of the indication field included in the certain UCI, whether to perform the area change, as illustrated in Fig. 24B. For example, in a case where the field indicates "0", it may mean that the UE does not perform the area change, and in a case where the field indicates "1", it may mean that the UE performs the area change to the corresponding area.

In this option, for example, in a case where the UE determines not to perform the change/handover related to the second cell, the UE may report that the change/handover related to the (existing) first cell is performed.

### [Option 2-3-3]

The UE may report the PCI/RS ID using certain UCI.

The PCI/RS ID reported by using certain UCI may be associated with the ID of the second cell.

The UE may report the PCI/RS ID using a certain UCI and report making changes/handovers related to the second cell associated with the PCI/RS ID.

For example, the ID of the second cell may be included/associated with the CSI reporting configuration/CSI resource configuration associated with the reported PCI/RS ID.

For example, the NW may determine that the UE performs the change/handover related to the second cell in a case where the reported ID of the second cell is different from the ID (serving area ID) of the current second cell.

The UE may also transmit an RRC parameter indicating whether to perform a change/handover related to the second cell. The UE may use the RRC parameter to report whether to perform a change/handover related to the second cell.

For example, in a case where the RRC parameter indicates the first value (for example, 0 (or 1) or false), it may mean that the UE does not perform the change/handover related to the second cell. Furthermore, for example, in a case where the RRC parameter indicates the second value (for example, 1 (or 0) or true), it may mean that the UE performs the change/handover related to the second cell.

Fig. 24C is a diagram illustrating an example of an indication field according to option 2-3-3. The UE may report, by using a value of the indication field included in the certain UCI, whether to perform the area change, as illustrated in Fig. 24C.

For example, in a case where the field indicates "00", the UE may report that the area change to the area corresponding to PCI#0/RS ID#0 (in this case, area #3) is performed.

In this option, for example, in a case where the UE determines not to perform the change/handover related to the second cell, the UE may report that the change/handover related to the (existing) first cell is performed.

According to Embodiment 2-3 described above, it is possible to appropriately report the change/handover related to the second cell using the indication by the UCI.

As described above, according to the second embodiment, the change/handover related to the second cell can be appropriately performed based on the report by the UE.

Note that the UE/NW may switch and apply the modes corresponding to the first embodiment and the second embodiment based on a certain configuration/parameter/indication.

### <Third Embodiment>

A third embodiment relates to a MAC CE for configuring/activating/deactivating a second cell.

The present embodiment is roughly divided into Embodiments 3-1 and 3-2. The following Embodiments 0-1/0-2 may be applied to the UE/NW alone or in combination.

In addition, the UE/NW may switch and apply a mode corresponding to Embodiments 3-1/3-2 below based on a certain configuration/parameter/indication.

### <<Embodiment 3-1>>

The second cell may include a cell (first cell) group, a cell (first cell), a TRP, and an SSB.

A cell group/cell/TRP/SSB configuring the second cell may be activated/deactivated by the MAC CE.

### [Option 3-1-1]

The UE may be indicated with a cell group/cell/TRP/SSB to be activated/deactivated using a bitmap format.

The UE may activate/deactivate the corresponding cell group/cell/TRP/SSB based on the indicated bits.

The UE may determine that a corresponding cell group/cell/TRP/SSB is deactivated in a case where a bit in the MAC CE indicates a first value (for example, 0 (or 1)), and determine that a corresponding cell group/cell/TRP/SSB is activated in a case where a bit in the MAC CE indicates a second value (for example, 1 (or 0)).

The number of bits/the number of octets used in the MAC CE may be determined based on the number of cell groups/the number of cells/the number of TRPs/the number of SSBs that can be configured for the UE based on at least one of configuration by RRC signaling and reported UE capability information.

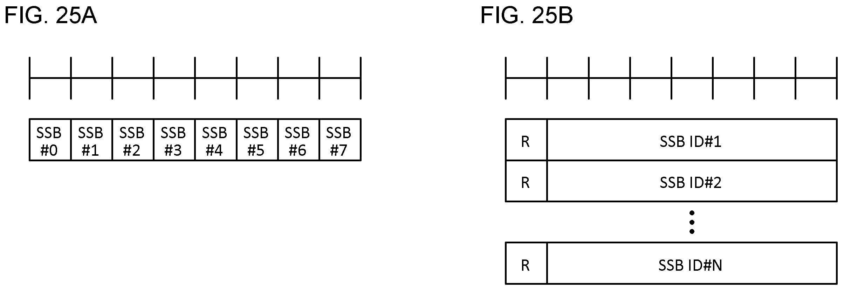

Fig. 25A is a diagram illustrating an example of a MAC CE according to option 3-1-1. The example illustrated in Fig. 25A illustrates a case where 8 SSBs are configured for the UE. The UE may perform activation/deactivation of the SSBs constituting the area by using a field (bitmap) of the MAC CE as illustrated in Fig. 25A.

Note that the number of SSBs illustrated in Fig. 25A is merely an example. The number of SSBs may be the number specified in the existing specification (for example, 64), or may be a number larger than the number specified in the existing specification (for example, 128 or 256), and the number may be determined for each second cell.

### [Option 3-1-2]

The UE may be explicitly indicated with one or more cell group IDs/cell IDs/TRP IDs/SSB IDs.

The UE may activate the corresponding cell group/cell/TRP/SSB for the indicated cell group ID/cell ID/TRP ID/SSB ID (included in the MAC CE).

The UE may deactivate the corresponding cell group/cell/TRP/SSB for cell group ID/cell ID/TRP ID/SSB ID not indicated (not included in the MAC CE).

The UE may assume that the SSB corresponding to the deactivated SSB ID is not transmitted.

The number of bits used in the MAC CE may be determined based on the number of cell groups/the number of cells/the number of TRPs/the number of SSBs that can be configured for the UE based on at least one of configuration by RRC signaling, reported UE capability information, and a value specified in a specification in advance.

The number of octets used in the MAC CE may be determined based on the number of cell groups/the number of cells/the number of TRPs/the number of SSBs, which are activatable, based on at least one of configuration by RRC signaling, reported UE capability information, and a value specified in a specification in advance.

Fig. 25B is a diagram illustrating an example of a MAC CE according to option 3-1-2. The example illustrated in Fig. 25B illustrates a case where N SSBs are activated for the UE. The UE may perform activation/deactivation of the SSBs constituting the area by using a field of the MAC CE as illustrated in Fig. 25B.

Note that the MAC CE in options 3-1-1/3-1-2 described above may be interchangeable with DCI.

In a case where a cell is activated/deactivated by using the MAC CE/DCI, a cell group ID (or a bitmap related to a cell group) may be included in the MAC CE/DCI.

In a case where TRP is activated/deactivated by using the MAC CE/DCI, a PCI/cell group ID (or a bitmap related to cells/cell groups) may be included in the MAC CE/DCI.

In a case where the SSB is activated/deactivated by using the MAC CE/DCI, the TRP/PCI/cell group ID (or a bitmap related to TRP/cell/cell group) may be included in the MAC CE/DCI.

### <<Embodiment 3-2>>

The UE may receive a MAC CE to activate/deactivate the second cell.

### [Option 3-2-1]

The UE may be indicated a second cell to be activated/deactivated using a bitmap format.

The UE may activate/deactivate the corresponding cell group/cell/TRP/SSB based on the indicated bits.

The UE may determine that the corresponding second cell is deactivated in a case where a bit in the MAC CE indicates a first value (for example, 0 (or 1)), and determine that the corresponding second cell is activated in a case where a bit in the MAC CE indicates a second value (for example, 1 (or 0)).

The number of bits/the number of octets used in the MAC CE may be determined based on the number of second cells that can be configured for the UE based on at least one of configuration by RRC signaling and reported UE capability information.

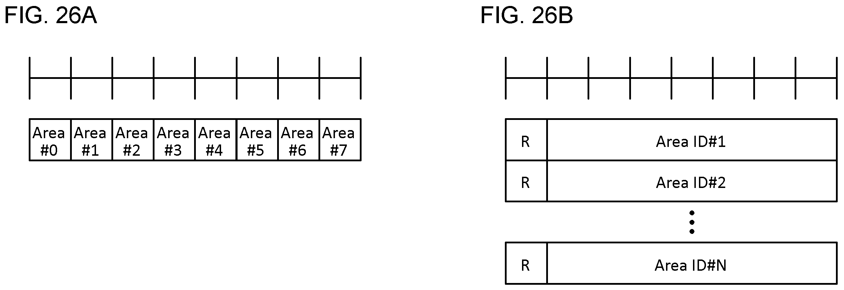

Fig. 26A is a diagram illustrating an example of a MAC CE according to option 3-2-1. The example illustrated in Fig. 26A illustrates a case where eight areas are configured for the UE. The UE may perform activation/deactivation of the configuration of the area by using a field (bitmap) of the MAC CE as illustrated in Fig. 26A.

Note that the number of second cells (areas) illustrated in Fig. 26A is merely an example. The number of second cells included in the MAC CE may be determined for each first cell.

### [Option 3-2-2]

The UE may be explicitly indicated an ID of one or more second cells.

The UE may activate the corresponding second cell for the ID of the second cell which is indicated (included in the MAC CE).

The UE may deactivate the corresponding second cell for the ID of the second cell which is not indicated (not included in the MAC CE).

The number of bits used in the MAC CE may be determined based on the number of second cells configurable for the UE based on at least one of configuration by RRC signaling, reported UE capability information, and a value specified in a specification in advance.

The number of octets used in the MAC CE may be determined based on the number of activatable second cells based on at least one of configuration by RRC signaling, reported UE capability information, and a value specified in a specification in advance.

Fig. 26B is a diagram illustrating an example of a MAC CE according to option 3-2-2. The example illustrated in Fig. 26B illustrates a case where N second cells (areas) are activated for the UE. The UE may perform the activation/deactivation of the area using the field of the MAC CE as illustrated in Fig. 26B.

Note that the MAC CE in options 3-2-1/3-2-2 described above may be interchangeable with DCI.

As described above, according to the third embodiment, the configuration/activation/deactivation of the second cell can be appropriately performed using the MAC CE (or DCI).

### <Fourth Embodiment>

A fourth embodiment relates to an operation of a UE moving between second cells.

In the present embodiment, an operation related to the change of the second cell of the UE in patterns (patterns F to M) of the mobility scenario in Fig. 12 will be described.

The UE may perform at least one of the following operations in patterns (patterns F to M):
· Change to RRC configuration of second cell at change destination.
· Beam (for example, the TCI state ID/RS index) switching.

The UE may receive the RRC reconfiguration in the RRC configuration change. In addition, the UE may apply the RRC configuration of the change destination held/obtained by the UE in advance.

The RRC configuration of the change destination may have the same configuration as the RRC configuration before the change, or may be configured by information of a difference from the RRC configuration before the change.

In beam switching, the UE may perform switching to the beam indicated by the NW, or the UE may select/determine a beam to be switched to and report the selected/determined beam to the NW.

In pattern F, the UE may not need to perform DL/UL synchronization (for example, a random access procedure) with the target area. The UE may assume that the same TA as the serving area is used, or may use the indicated TA/TAG.

In pattern G, the UE may perform DL/UL synchronization (for example, random access procedure/UE-based TA measurement, etc.) with the target area.

In pattern H, the UE may not need to perform DL/UL synchronization (for example, random access procedure/UE-based TA measurement, etc.) with the target area. The UE may assume that the same TA as the serving area is used, or may use the indicated TA/TAG.

In pattern I, the UE may perform DL/UL synchronization (for example, random access procedure/UE-based TA measurement, etc.) with the target area.

In pattern J, the UE may or may not need to perform DL/UL synchronization (for example, random access procedure/UE-based TA measurement, etc.) with the target area. The UE may assume that the same TA as the serving area is used, or may use the indicated TA/TAG.

In pattern K, the UE may perform DL/UL synchronization (for example, random access procedure/UE-based TA measurement, etc.) with the target area.

In pattern L, the UE may or may not need to perform DL/UL synchronization (for example, random access procedure/UE-based TA measurement, etc.) with the target area. The UE may assume that the same TA as the serving area is used, or may use the indicated TA/TAG.

In pattern M, the UE may perform DL/UL synchronization (for example, random access procedure/UE-based TA measurement, etc.) with the target area.

As described above, the UE operation for each pattern may be specified in advance in a specification.

In addition, the UE may configure/indicate/notify whether to perform DL/UL synchronization (for example, random access procedure/UE-based TA measurement, etc.) with the target area using RRC signaling/MAC CE/DCI in each pattern.

For example, the UE may use certain parameters/fields/bits to determine whether to perform DL/UL synchronization (for example, random access procedure/UE-based TA measurement, etc.) with the target area.

For example, in a case where the certain parameter/field/bit indicates a first value (for example, 0 (or 1) or false), the UE may determine not to perform DL/UL synchronization (for example, random access procedure/UE-based TA measurement, etc.) with the target area. Further, for example, in a case where the certain parameter/field/bit indicates a second value (for example, 1 (or 0) or true), the UE may determine to perform DL/UL synchronization (for example, random access procedure/UE-based TA measurement, etc.) with the target area.

Furthermore, for example, the UE may determine whether to perform DL/UL synchronization (for example, random access procedure/UE-based TA measurement, etc.) with the target area based on whether the TA value of the target area is received by using RRC signaling/MAC CE/DCI.

Further, for example, whether to perform DL/UL synchronization (for example, random access procedure/UE-based TA measurement, etc.) with the target area in each pattern may be determined based on the reported UE capability information.

In a case where the frequency/subcarrier spacing is different between the second cells, the UE may assume that an offset value of TA configured by using RRC signaling is changed.

Although the UE operation accompanying the UE movement between the second cells has been described in the present embodiment, the present embodiment may also be applied to the UE operation accompanying the UE movement in the second cell.

As described above, according to the fourth embodiment, the operation of the UE moving between the second cells/in the second cell can be appropriately defined.

### <Fifth Embodiment>

A fifth embodiment relates to a change/handover operation of the second cell based on the position information of the UE.

The UE may trigger a change/handover of the second cell from the NW (for example, the base station of the source cell/area). In this case, the first embodiment is applicable.

The trigger of the change/handover may be performed using, for example, at least one of the RRC reconfiguration message and the MAC CE of the cell switch command.

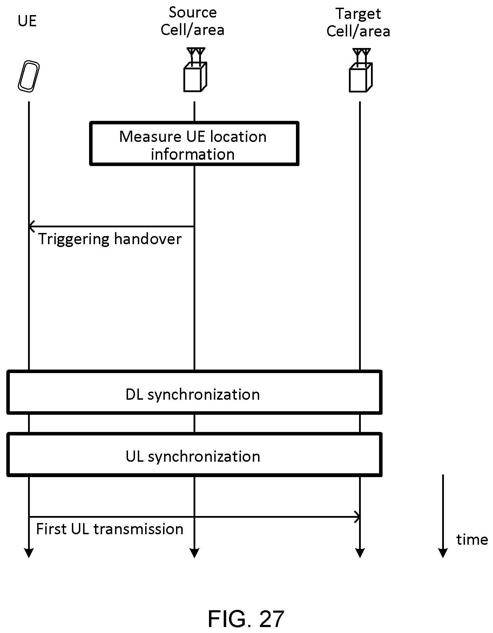

For example, the NW (for example, the base station of the source cell/area) may measure/acquire position information of the UE and trigger a change/handover of the second cell to the UE based on the position information (see Fig. 27).

After triggering the change/handover of the second cell, the UE may perform a DL/UL synchronization operation to the target cell/area and perform an initial UL transmission.

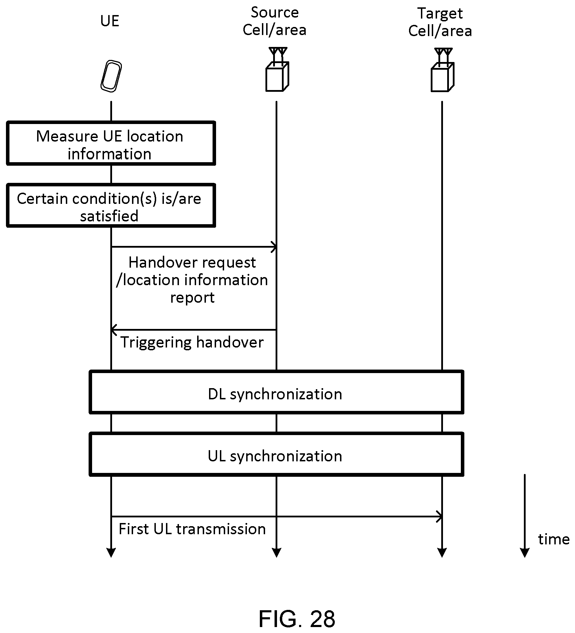

Further, for example, the UE may measure/acquire its own position information, and perform at least one of a request for a change/handover of the second cell and a report of the position information in a case where a certain condition is satisfied. Next, the NW (for example, the base station of the source cell/area) may trigger a change/handover of the second cell to the UE based on the position information (see Fig. 28).

After triggering the change/handover of the second cell, the UE may perform a DL/UL synchronization operation to the target cell/area and perform an initial UL transmission.

The UE may also determine to perform the change/handover of the second cell without explicit indication from the NW. In this case, the second embodiment is applicable.

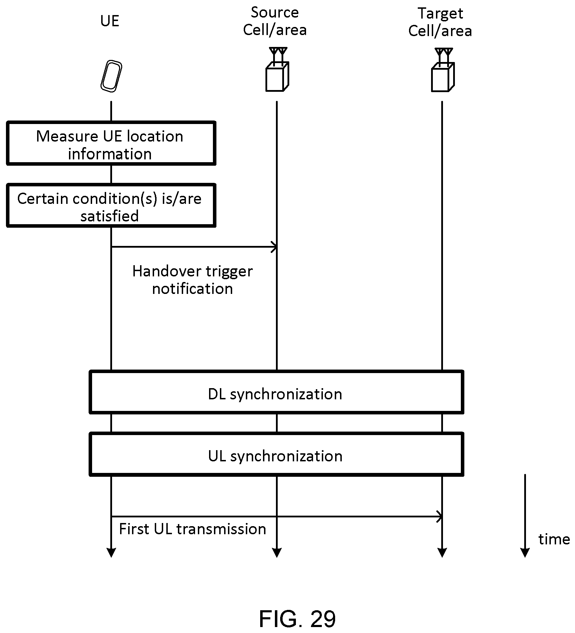

For example, the UE may measure/acquire its own position information and determine to perform the change/handover of the second cell in a case where a certain condition is satisfied. The UE may then transmit to the NW (for example, the base station of the source cell/area) that a change/handover of the second cell is performed (handover trigger notification) (see Fig. 29).

After triggering the change/handover of the second cell, the UE may perform a DL/UL synchronization operation to the target cell/area and perform an initial UL transmission.

Note that the timelines related to the handover operation illustrated in Figs. 27 to 29 are merely examples, and are not limited to these examples. For example, at least two operations illustrated in Figs. 27 to 29 may be performed back and forth with each other. For example, the DL/UL synchronization operation by the UE and the handover trigger/handover trigger notification transmission/reception operation may be interchanged with each other.

Hereinafter, an operation based on specific position information will be described.

The UE/NW may perform the change/handover of the second cell by using the position information based on the reference point.

### <<Trigger timing of handover>>

### [Option 5-1-1]

The NW may trigger the handover by using a certain signal based on the position information of the UE reported from the UE or measured by the NW.

The certain signal may be, for example, RRC signaling/MAC CE/DCI.

### [[Option 5-1-1-1]]

The UE may trigger a handover using a signal containing explicit information.

The explicit information may be, for example, a target cell/cell for area/ID that specifies an area/TCI state ID/BWP ID.

### [[Option 5-1-1-2]]

The UE may trigger a handover using a signal containing implicit information.

The implicit information may be, for example, a predefined/configured TCI state ID/RS ID, a TCI state ID/RS ID associated with a cell/area different from a serving cell/area, or information regarding a random access channel for a cell/area different from the serving cell/area.

Note that the UE may receive a signal including the explicit/implicit information from a target cell/source cell/target area/serving area/other areas.

The other areas may be, for example, areas in which only a certain signal (for example, at least one of a signal related to handover and a control signal) is transmitted.

### [Option 5-1-2]

The UE may measure the distance between the UE and the reference point using its position information and the configured/defined reference point.

The UE may then trigger a handover based on certain conditions (for example, in a case where a certain condition is satisfied).

The reference point may be indicated based on the coordinates of the origin.

Note that, in the present disclosure, the reference point/origin/UE position may be indicated in a Cartesian coordinate system or may be indicated in a polar coordinate system. Furthermore, in the present disclosure, the reference point/origin/UE position may be indicated by a global coordinate system (GCS) or a local coordinate system (LCS). Information related to conversion from the GCS to the LCS may be configured/indicated to the UE.

The reference point/origin coordinates and at least one of the certain condition may be predefined in a specification, may be configured/indicated/notified to the UE by using RRC signaling/MAC CE/DCI, may be determined based on UE capability information, or may be determined by a combination thereof.

The coordinates of the reference point/origin and at least one of the certain conditions may be configured/indicated/determined to be UE specific or may be configured/indicated/determined to be UE common.

The coordinates of the reference point/origin and at least one of the certain conditions may be configured/indicated/determined per BWP/per CC/per cell/per cell group/per area/per UE.

The configurable maximum number according to the coordinates of the reference point/origin and at least one of the certain conditions may be determined based on UE capability information or may be configured using RRC signaling.

In the present disclosure, the certain condition may include at least one of a condition related to position information of the UE and a condition related to speed/acceleration/measurement result (for example, L1/L3-RSRP/SINR) of the UE. At least one of these conditions may be a condition based on an actual measurement value or a condition based on a predicted value. For calculation of the predicted value, an artificial intelligence (AI)/machine learning (ML) model on the UE/NW side may be used.

The position information and certain conditions of the UE will be described below. The position information of the UE and the certain conditions for the handover operation may be determined according to at least one of the following options 5-1-2-1 to 5-1-2-4.

### [[Option 5-1-2-1]]

One certain condition (for example, threshold/magnitude relationship related to distance/coordinates) and one reference point may be configured.

For example, in a case where the certain condition is distance (positive value (for example, it may be the square of the distance)), the handover may be triggered in a case where the condition of the distance between the reference point and the UE is greater/less than a threshold.

In this case, a condition of the distance between the reference point and the UE may be separately configured for each axis of a Cartesian coordinate system (x-axis, y-axis, z-axis).

Furthermore, in this case, the condition of the distance between the reference point and the UE may be configured for any axis in the Cartesian coordinate system (x-axis, y-axis, z-axis).

For example, in a case where the certain condition is coordinates (a positive or negative value), the handover may be triggered in a case where the position coordinates of the UE are greater than/less than the certain coordinates.

In this case, the handover may be triggered in a case where the position coordinates of the UE are large/small in all of the respective components (x component, y component, z component) of the certain coordinates.

In addition, in this case, the handover may be triggered in a case where any of the components (x component, y component, z component) of the certain coordinates of the position coordinates of the UE is large/small.

Furthermore, in this case, the value of each component of the certain coordinates may be configured to be either positive or negative.

In a case where each coordinate is represented in a Cartesian coordinate system, in a case where the coordinates of the reference point #n (n may be a natural number) are (xₙ, yₙ, zₙ) and the coordinates of the UE are (x', y', z'), the distance lₙ from the reference point #n to the UE may be represented by {(xₙ-x')²+(yₙ-y')²+(zₙ-z')²}^{1/2}. Whether to perform the handover may be determined by comparing lₙ with a condition Lₙ (and Lₙ') for each reference point #n.

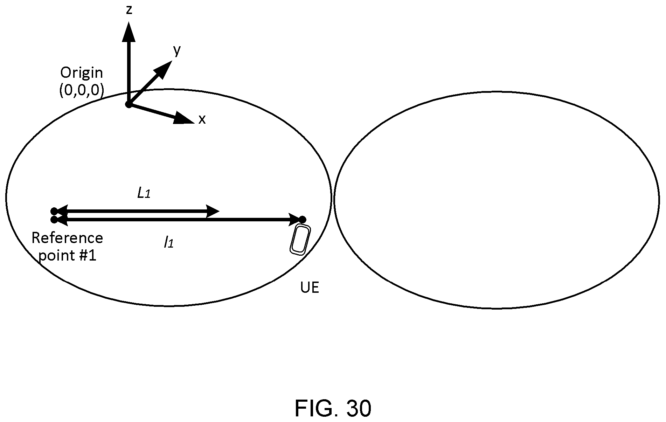

Fig. 30 is a diagram illustrating an example of a position of the UE according to option 5-1-2-1. In the example illustrated in Fig. 30, the handover related to the second cell is determined based on one reference point (reference point #1), the threshold (L₁) of the distance from the reference point, and the position of the UE (distance l₁ from the reference point).

### [[Option 5-1-2-2]]

One certain condition (for example, threshold/magnitude relationship related to distance/coordinates) and a plurality of reference points may be configured.

For the conditions for each reference point, the above option 5-1-2-1 may be applied.

For each reference point, a trigger for a different UE operation (for example, at least one of a handover operation, a determination related to an event, a signal quality measurement, and a start/stop of a certain timer) may be configured.

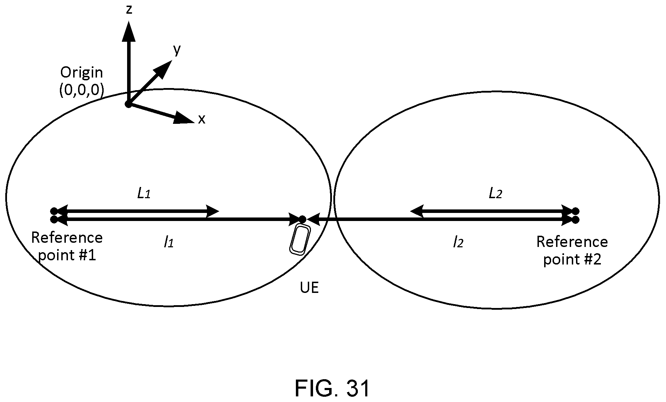

Fig. 31 is a diagram illustrating an example of a position of the UE according to option 5-1-2-2. In the example illustrated in Fig. 31, the handover related to the second cell is determined based on the plurality of reference points (reference points #1 and #2), the thresholds (L₁ and L₂, where L₁ = L₂) of the distance from each reference point, and the position (distance l₁ from reference point #1 and distance l₂ from reference point #2) of the UE.

### [[Option 5-1-2-3]]

A plurality of certain conditions (for example, threshold/magnitude relationship related to distance/coordinates) and one reference point may be configured.

For each condition, the above option 5-1-2-1 may be applied.

For each condition, a trigger for a different UE operation (for example, at least one of a handover operation, an event related determination, a signal quality measurement, and a start/stop of a certain timer) may be configured.

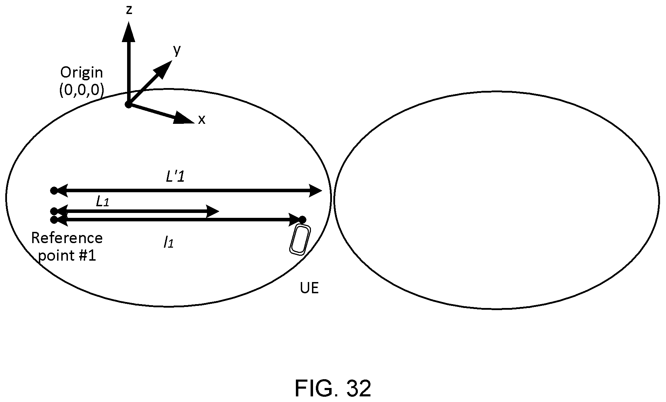

Fig. 32 is a diagram illustrating an example of a position of the UE according to option 5-1-2-3. In the example illustrated in Fig. 32, the handover related to the second cell is determined based on one reference point (reference point #1), the thresholds (L₁ and L₁') of the distance from the reference point, and the position of the UE (distance l₁ from the reference point #1).

### [[Option 5-1-2-4]]

A plurality of certain conditions (for example, threshold/magnitude relationship related to distance/coordinates) and a plurality of reference points may be configured.

For each condition for each reference point, the above option 5-1-2-1 may be applied.

For each condition for each reference point, a trigger for a different UE operation (for example, at least one of a handover operation, an event related determination, a signal quality measurement, and a start/stop of a certain timer) may be configured.

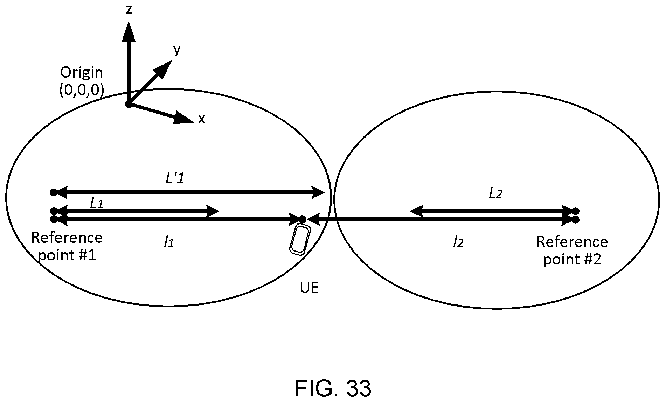

Fig. 33 is a diagram illustrating an example of a position of the UE according to option 5-1-2-4. In the example illustrated in Fig. 33, the handover related to the second cell is determined based on a plurality of reference points (reference point #1), thresholds (L₁ and L₁' for reference point 1 and L₂ for reference point #2) of a distance from each reference point, and a position (distance l₁ from reference point #1 and distance l₂ from reference point #2) of the UE.

Note that, in the present disclosure, the object/operation triggered by the UE or the object/operation triggering the UE may be at least one of a handover operation, requesting a handover to the NW, measurement related to an event, signal quality measurement, and start/stop of a certain timer.

Note that, in the present embodiment, information/conditions regarding the event may be configured for the UE from the NW, or the event may be specified in advance in a specification.

### <<Type of origin/reference point>>

The type of the origin/reference point may be predefined in a specification, may be configured/indicated/notified to the UE by using RRC signaling/MAC CE/DCI, may be determined based on reported UE capability information, or may be determined based on a combination thereof.

The origin/reference point may be defined/configured as the position of the physical object.

For example, the origin/reference point may be the position/coordinates of a certain base station/TRP/UE.

For example, a plurality of origin/reference point candidates may be preset/defined. In this case, which origin/reference point of the plurality of candidates to use may be configured/indicated/notified by using RRC signaling/MAC CE/DCI, may be defined in the specification in advance, may be determined based on the reported UE capability information, or may be determined by a combination thereof.

The origin/reference point may also be defined/configured as a position calculated using a certain method.

For example, the origin/reference point may be at least one of the position/coordinates of a cell end/area end, the position/coordinates at a certain distance from a certain base station/TRP/UE, and a center of gravity/center of coordinates of the plurality of base stations/TRPs/UEs.

For example, a plurality of candidates of origin/reference point/certain distance may be preset/defined. In this case, which origin/reference point/certain distance of the plurality of candidates to use may be configured/indicated/notified by using RRC signaling/MAC CE/DCI, may be defined in the specification in advance, may be determined based on the reported UE capability information, or may be determined by a combination thereof.

The origin/reference point may be defined/configured as an arbitrary position. In this case, the origin/reference point may be determined by the UE, or may be determined based on coordinates (for example, longitude/latitude/altitude) used in other services.

Note that the origin/reference point may be commonly configured/defined in a non-terrestrial network (NTN) and a terrestrial network (TN), or may be separately configured/defined.

### <<Notification of trigger to NW>>

The UE may transmit a notification (handover trigger notification) about triggering the handover to the NW using a certain UL signal.

The certain UL signal may be, for example, PUCCH/PUSCH/PRACH/SRS/other signals.

For example, the UE may transmit a handover trigger notification to the NW by using a scheduling request (SR). In this case, the UE may use the SR configuration/SR resource dedicated to the notification. In a case where SR configuration/SR resource dedicated to the notification is not configured for the UE, the UE may use a normal (not dedicated to the notification) SR configuration/SR resource.

For example, the UE may transmit the handover trigger notification to the NW by using the MAC CE. In this case, if there is a UL grant (for example, free resources of the PUSCH), the UE may transmit the MAC CE in the PUSCH, and if not, the UE may transmit the SR and request the UL grant.

For example, the UE may transmit the handover trigger notification to the NW by using the UCI. In this case, the UE may use resources allocated in periodic/aperiodic/semi-persistent CSI reports. To distinguish/identify from existing CSI reports, a bit may be configured to identify an application of the CSI, or one or more certain bits may be used for handover trigger notification.

The UE may transmit the handover trigger notification to a base station/TRP of a serving cell/area, or may transmit the handover trigger notification to a base station/TRP of a target cell/area (cell/area having different frequency/CU/DU from serving cell/area).

The handover trigger notification may include at least one of information/number for identifying a condition related to a trigger, information/number for identifying content of the trigger, information/number of target cells/areas, a TCI state ID, TA, a TAG ID, measurement quality of a signal (L1/L3-RSRP/SINR), and an index of a reference signal corresponding to the measurement quality.

### <<UE operation after handover trigger>>

The UE may perform at least one of the following operations after triggering the handover:
· Transmitting PRACH to target cell/area
· Monitoring PDCCH in target cell/area
· Stopping signal transmission/reception to/from the source cell/area
· Performing RRC reconfiguration

The UE may not need to transmit PRACH to the target cell/area in certain cases (that is, the UE may not need to perform the random access procedure). The certain case may be at least one of a case in which the UE already holds/obtains the TA of the target cell/area, a case in which the TA of the source cell/area is the same as the TA of the target cell/area, and a case in which the TA of the target cell/area is included in the signal related to a trigger of the handover.

### <<Method of measuring position information>>

The position information of the UE may be measured/determined based on at least one of the time/phase (for example, time/phase shift) of the PDCCH/PDSCH/reference signal (for example, SSB/CSI-RS/TRS) transmitted from the NW, the PUCCH/PUSCH/reference signal (for example, SRS) transmitted from the UE, and the TA.

In addition, the position information of the UE may be measured/determined based on information (for example, the UE Movement path, the duration/time of stay of the UE at a certain point) that can be obtained from a certain service (for example, Mobility as a Service (MaaS)/Global Positioning System (GPS))/node (for example, Location Management Function (LMF)) in the upper layer.

Further, the position information of the UE may be determined based on information related to (existing) positioning/sensing.

The position information of the UE may be measured by the UE and reported to the NW, or may be measured by the NW.

The position information of the UE may be an actual measurement value or a predicted value. The AI/ML model on the UE/NW side may be used for measuring/predicting the position information of the UE.

Note that, in the present embodiment, the position information, the connected-base-station information (for example, PCI or the like), the information estimated on the NW side based on the L1/L3 report information, the information regarding the continuous path predicted on the UE side, and the time information of the point where the UE exists may be interchangeable with one another.

As described above, according to the fifth embodiment, by performing the change/handover of the second cell based on the position information of the UE, the change/handover of the second cell can be appropriately performed even in a case where the quality rapidly/complicatedly changes at the boundary of the second cell.

### <Supplement>

### [Notification of Information to UE]

Notification of any information (from the network (NW)) (for example, the base station (BS) to the UE (in other words, reception of any information from the BS by the UE) in the above-described embodiments may be performed using physical layer signaling (for example, DCI), upper layer signaling (for example, RRC signaling, a MAC CE), a certain signal/channel (for example, a PDCCH, a PDSCH, or a reference signal), or a combination thereof.

In a case where notification is performed by a MAC CE, the MAC CE may be identified by including, in a MAC subheader, a new logical channel ID (LCID) not defined in existing standards.

In a case where notification is performed using DCI, the notification may be performed by a certain field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### [Notification of Information from UE]

Notification of any information from the UE (to the NW) (in other words, transmission/report of any information to the BS by the UE) in the above-described embodiments may be performed using physical layer signaling (for example, UCI), upper layer signaling (for example, RRC signaling, a MAC CE), a certain signal/channel (for example, a PUCCH, a PUSCH, a PRACH, or a reference signal), or a combination thereof.

In a case where notification is performed by a MAC CE, the MAC CE may be identified by including, in a MAC subheader, an LCID not defined in existing standards.

In a case where notification is performed by a UCI, the notification may be transmitted using a PUCCH or PUSCH.

In addition, the notification of any information from the UE in the above-described embodiments may be performed periodically, semi-persistently, or aperiodically.

### [About Application of Each Embodiment]

At least one of the above-described embodiments may be applied in a case where a certain condition is satisfied. The certain condition may be defined in the standards, or may be notified to the UE/BS using upper layer signaling/physical layer signaling.

At least one of the above-described embodiments may be applied only to a UE that has reported a certain UE capability or supports the certain UE capability.

The certain UE capability may indicate that it supports certain processing/operation/control/information for at least one of the above embodiments.

In addition, the certain UE capability may be capability applied over all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each Feature Set (FS) or Feature Set Per Component-carrier (FSPC).

In addition, the certain UE capability may be capability applied across all the duplex schemes (in common irrespective of duplex scheme) or may be capability for each duplex scheme (for example, time division duplex (TDD) and frequency division duplex (FDD)).

In addition, at least one of the above-described embodiments may be applied in a case where the UE configure/activate/trigger certain information related to the above-described embodiment (or to perform the operation of the above-described embodiment) by upper layer signaling/physical layer signaling. For example, the certain information may be information indicating that the cell-free operation is enabled, an arbitrary RRC parameter for a certain release (for example, Rel. 20 or later), or the like.

The UE may apply, for example, the operation of Rel. 15 to 19 in a case where the UE does not support at least one of the certain UE capabilities or is not configured with the certain information.

### (Supplementary Notes)

Regarding one embodiment of the present disclosure, the following supplementary notes of the invention will be given.

### [Supplementary Note 1-1]

A terminal including a transmission/reception unit that receives a trigger indication of a handover based on position information of the terminal or transmits a notification of triggering of the handover, and a control unit that controls an operation of the handover based on the trigger indication or the notification.

### [Supplementary Note 1-2]

The terminal according to Supplementary Note 1-1, in which the trigger indication is transmitted based on position information of the terminal that is measured by a network or the terminal.

### [Supplementary Note 1-3]

The terminal according to Supplementary Note 1-1 or Supplementary Note 1-2, in which the notification is transmitted to a cell before handover or a cell after handover.

### [Supplementary Note 1-4]

The terminal according to any one of Supplementary Note 1-1 to Supplementary Note 1-3, in which the control unit controls an operation of the handover according to position information of the terminal based on one or more reference points and one or more conditions corresponding to the reference points.

### [Supplementary Note 2-1]

A terminal including a reception unit that receives a radio resource control (RRC) configuration related to a cell whose physical range is changed, and a control unit that controls a handover operation among a plurality of cells based on the RRC configuration.

### [Supplementary Note 2-2]

The terminal according to Supplementary Note 2-1, in which one physical cell identifier (PCI) for a cell whose physical range is not changed corresponds to one cell whose physical range is changed.

### [Supplementary Note 2-3]

The terminal according to Supplementary Note 2-1 or 2-2, in which a plurality of physical cell identifiers (PCI) related to a cell whose physical range is not changed correspond to a cell whose physical range is changed.

### [Supplementary Note 2-4]

The terminal according to any one of Supplementary Note 2-1 to supplementary note 2-3, in which the RRC configuration includes at least one of an identifier of a cell whose physical range is changed, an identifier of a cell whose physical range is not changed, an identifier of a serving cell, an index of a transmission and reception point, and an index of a reference signal.

### [Supplementary Note 3-1]

A terminal including a reception unit that receives trigger information regarding a handover, and a control unit that controls, based on the trigger information, at least one of uplink synchronization and downlink synchronization for a cell whose physical range is changed.

### [Supplementary Note 3-2]

The terminal according to Supplementary Note 3-1, in which the trigger information is transmitted by using a radio resource control (RRC) reconfiguration.

### [Supplementary Note 3-3]

The terminal according to Supplementary Note 3-1 or Supplementary Note 3-2, in which the trigger information is transmitted by using a certain Medium Access Control (MAC) element.

### [Supplementary Note 3-4]

The terminal according to any one of Supplementary Note 3-1 to Supplementary Note 3-3, in which the trigger information is transmitted by using downlink control information.

### [Supplementary Note 4-1]

A terminal including a control unit that determines whether to perform an operation related to a handover based on a trigger condition related to the handover to a cell whose physical range is changed, and a transmission unit that transmits a report on the handover in a case where the handover operation is performed.

### [Supplementary Note 4-2]

The terminal according to Supplementary Note 4-1, in which the trigger condition is configured by using radio resource control (RRC) reconfiguration.

### [Supplementary Note 4-3]

The terminal according to Supplementary Note 4-1 or Supplementary Note 4-2, in which a report on the handover is transmitted by using a certain medium access control (MAC) element or uplink control information.

### [Supplementary Note 4-4]

The terminal according to any one of Supplementary Note 4-1 to Supplementary Note 4-3, in which an operation related to the handover is at least one of uplink synchronization and downlink synchronization with respect to the cell.

### [Supplementary Note 5-1]

A terminal including a reception unit that receives a medium access control (MAC) element for activating at least one of a first cell whose physical range is not changed, the first cell including a second cell whose physical range is changed, a group of the first cells, a transmission and reception point constituting the second cell, a synchronization signal transmitted in the second cell, and the second cell, and a control unit that determines at least one of activation of the first cell, activation of a group of the first cells, activation of the transmission and reception point, activation of the synchronization signal, and activation of the second cell based on the MAC element.

### [Supplementary Note 5-2]

The terminal according to Supplementary Note 5-1, in which the MAC element indicates, in a bitmap format, at least one of activation of the first cell, activation of a group of the first cells, activation of the transmission and reception point, activation of the synchronization signal, and activation of the second cell.

### [Supplementary Note 5-3]

The terminal according to Supplementary Note 5-1 or Supplementary Note 5-2, in which the MAC element includes at least one of an identifier of the first cell, an identifier of a group of the first cells, an identifier of the transmission and reception point, an index of the synchronization signal, and an identifier of the second cell.

### [Supplementary Note 5-4]

The terminal according to any one of Supplementary Note 5-1 to Supplementary Note 5-3, in which in a case where the first cell is activated by the MAC element, the MAC element includes an identifier of a group of the first cells, in a case where the transmission and reception point is activated by the MAC element, the MAC element includes an identifier of a group of the first cells and an identifier of the first cell, and in a case where the synchronization signal is activated by the MAC element, the MAC element includes an identifier of the group of the first cells, an identifier of the first cell, and an identifier of the transmission and reception point.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

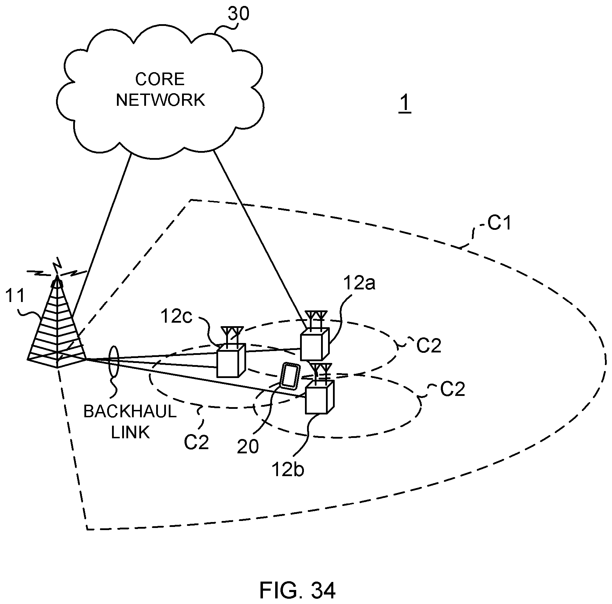

Fig. 34 is a diagram illustrating an example of a schematic configuration of a radio communication system according to one embodiment. A radio communication system 1 (simply referred to as the system 1) may be a system that implements communication using long term evolution (LTE), 5th generation mobile communication system New Radio (5G NR), and the like defined by third generation partnership project (3GPP).

Further, the radio communication system 1 may support dual connectivity (multi-RAT dual connectivity (MR-DC)) among a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity among a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base station 10" in a case where the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber in compliance with common public radio interface (CPRI), an X2 interface, or the like) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, upper layer control information, a system information block (SIB), and the like are transmitted on the PDSCH. The user data, upper layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource for searching for DCI. The search space corresponds to a search area and a search method for PDCCH candidates. One CORESET may be associated with one or more search spaces. The UE may monitor a CORESET associated with a certain Search Space based on a Search Space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

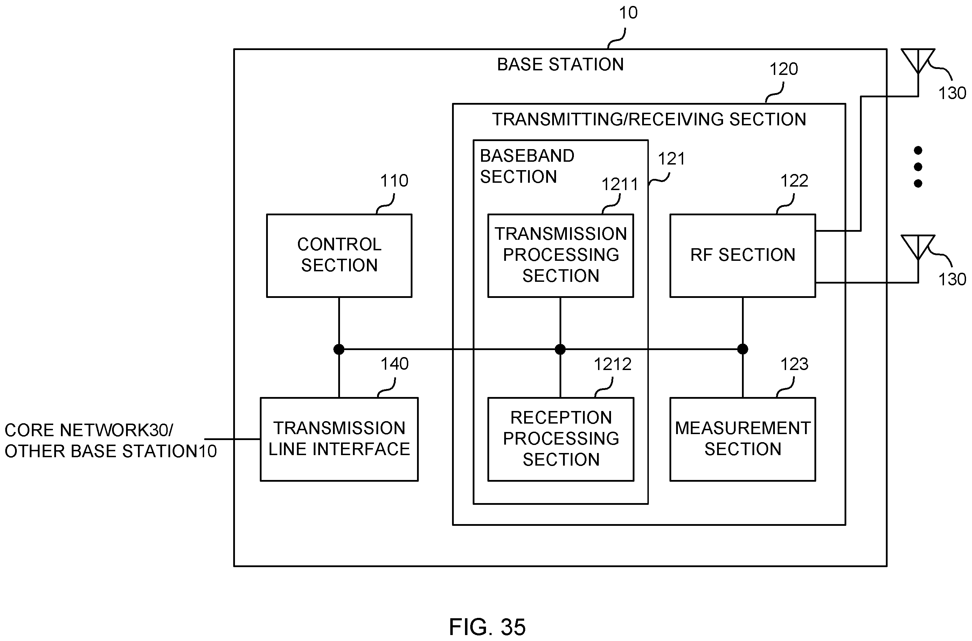

Fig. 35 is a diagram illustrating an example of a configuration of the base station according to one embodiment. The base station 10 includes a control unit 110, a transmission/reception unit 120, a transmission/reception antenna 130, and a transmission line interface 140. It is noted that one or more of the control units 110, one or more of the transmission/reception units 120, one or more of the transmission/reception antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control unit 110 controls the entire base station 10. The control unit 110 can include a controller, a control circuit, or the like, which is described based on common recognition in a technical field according to the present disclosure.

The control unit 110 may control signal generation, scheduling (for example, resource allocation or mapping), and the like. The control unit 110 may control transmission/reception, measurement, and the like using the transmission/reception unit 120, the transmission/reception antenna 130, and the transmission line interface 140. The control unit 110 may generate data to be transmitted as a signal, control information, a sequence, and the like, and may forward the data, the control information, the sequence, and the like to the transmission/reception unit 120. The control unit 110 may perform call processing (such as configuration or releasing) of a communication channel, management of the state of the base station 10, and management of a radio resource.

The transmission/reception unit 120 may include a baseband section 121, a radio frequency (RF) section 122, and a measurement section 123. The baseband section 121 may include a transmission processing section 1211 and a reception processing section 1212. The transmission/reception unit 120 can include a transmitter/receiver, an RF circuit, a base band circuit, a filter, a phase shifter, a measurement circuit, a transmission/reception circuit, or the like, which is described based on common recognition in a technical field according to the present disclosure.

The transmission/reception unit 120 may be constituted as an integrated transmission/reception unit, or may be constituted by a transmitting section and a reception unit. The transmitting section may include the transmission processing section 1211 and the RF section 122. The reception unit may include the reception processing section 1212, the RF section 122, and the measurement section 123.

The transmission/reception antenna 130 can include an antenna, for example, an array antenna, or the like, which is described based on common recognition in a technical field according to the present disclosure.

The transmission/reception unit 120 may transmit the above-described downlink channel, synchronization signal, downlink reference signal, and the like. The transmission/reception unit 120 may receive the above-described uplink channel, uplink reference signal, and the like.

The transmission/reception unit 120 may form at least one of a Tx beam or a reception beam using digital beam forming (for example, precoding), analog beam forming (for example, phase rotation), and the like.

The transmission/reception unit 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control unit 110, to generate a bit string to be transmitted.

The transmission/reception unit 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmission/reception unit 120 (RF section 122) may perform modulation to a radio frequency band, filtering processing, amplification, and the like on the baseband signal, and may transmit a signal in the radio frequency band via the transmission/reception antenna 130.

Meanwhile, the transmission/reception unit 120 (RF section 122) may perform amplification, filtering processing, demodulation to a baseband signal, and the like on the signal in the radio frequency band received by the transmission/reception antenna 130.

The transmission/reception unit 120 (reception processing section 1212) may apply reception processing such as analog-to-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmission/reception unit 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control unit 110.

The transmission line interface 140 may transmit/receive a signal (backhaul signaling) to and from an apparatus (for example, a network node providing the NF) included in the core network 30, another base station 10, and the like, and may acquire and transmit user data (user plane data), control plane data, and the like for the user terminal 20.

It is noted that, the transmitting section and the reception unit of the base station 10 in the present disclosure may include at least one of the transmission/reception unit 120, the transmission/reception antenna 130, and the transmission line interface 140.

The transmission/reception unit 120 may transmit a Radio Resource Control (RRC) configuration related to a cell whose physical range is changed. The control unit 110 may indicate the handover operation among the plurality of cells using the RRC configuration (zeroth embodiment).

The transmission/reception unit 120 may transmit trigger information regarding the handover. The control unit 110 may indicate at least one of uplink synchronization and downlink synchronization for a cell whose physical range is changed by using the trigger information (first/fourth embodiments).

The transmission/reception unit 120 may transmit the configuration of the trigger condition related to the handover to the cell whose physical range is changed. The control unit 110 may control reception of the report on the handover transmitted based on the trigger condition (second embodiment).

The transmission/reception unit 120 may transmit a medium access control (MAC) element for activation of at least one of a first cell including a second cell whose physical range is changed and whose physical range is not changed, a group of the first cells, a transmission and reception point constituting the second cell, a synchronization signal transmitted in the second cell, and the second cell. The control unit 110 may indicate at least one of the activation of the first cell, the activation of the group of the first cell, the activation of the transmission and reception point, the activation of the synchronization signal, and the activation of the second cell using the MAC element (third embodiment).

The transmission/reception unit 120 may transmit a handover trigger indication based on the position information of the terminal or receive a notification that the handover has been triggered. The control unit 110 may determine the operation of the handover based on the trigger indication or the notification (fifth embodiment).

### (User Terminal)

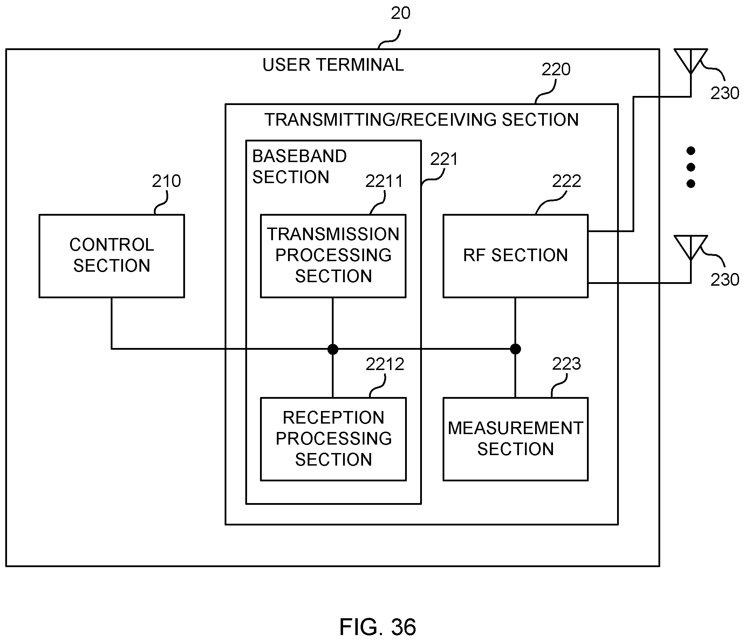

Fig. 36 illustrates an example of a configuration of the user terminal according to one embodiment. The user terminal 20 includes a control unit 210, a transmission/reception unit 220, and a transmission/reception antenna 230. It is noted that one or more of the control units 210, one or more of the transmission/reception units 220, and one or more of the transmission/reception antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control unit 210 controls the entire user terminal 20. The control unit 210 can include a controller, a control circuit, and the like that are described based on common recognition in the technical field related to the present disclosure.

The control unit 210 may control signal generation, mapping, and the like. The control unit 210 may control transmission/reception, measurement, and the like using the transmission/reception unit 220 and the transmission/reception antenna 230. The control unit 210 may generate data to be transmitted as a signal, control information, a sequence, and the like, and may forward the data, the control information, the sequence, and the like to the transmission/reception unit 220.

The transmission/reception unit 220 may include a baseband section 221, an RF section 222, and a measurement section 223. The baseband section 221 may include a transmission processing section 2211 and a reception processing section 2212. The transmission/reception unit 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmission/reception unit 220 may be formed as an integrated transmission/reception unit, or may include a transmitting section and a reception unit. The transmitting section may include the transmission processing section 2211 and the RF section 222. The reception unit may include the reception processing section 2212, the RF section 222, and the measurement section 223.

The transmission/reception antenna 230 can include an antenna that is described based on common recognition in the technical field related to the present disclosure, for example, an array antenna or the like.

The transmission/reception unit 220 may receive the above-described downlink channel, synchronization signal, downlink reference signal, and the like. The transmission/reception unit 220 may transmit the above-described uplink channel, uplink reference signal, and the like.

The transmission/reception unit 220 may form at least one of a Tx beam and a reception beam by using digital beam forming (for example, precoding), analog beam forming (for example, phase rotation), and the like.

The transmission/reception unit 220 (transmission processing section 2211) may perform PDCP layer processing, RLC layer processing (for example, RLC retransmission control), MAC layer processing (for example, HARQ retransmission control), and the like, for example, on data, control information, and the like acquired from the control unit 210, to generate a bit string to be transmitted.

The transmission/reception unit 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where transform precoding is enabled for a channel (for example, PUSCH), the transmission/reception unit 220 (transmission processing section 2211) may perform DFT processing as the transmission processing to transmit the channel by using a DFT-s-OFDM waveform, and otherwise, DFT processing does not have to be performed as the transmission processing.

The transmission/reception unit 220 (RF section 222) may perform modulation to a radio frequency band, filtering processing, amplification, and the like on the baseband signal, to transmit a signal in the radio frequency band via the transmission/reception antenna 230.

Meanwhile, the transmission/reception unit 220 (RF section 222) may perform amplification, filtering processing, demodulation to a baseband signal, and the like on the signal in the radio frequency band received by the transmission/reception antenna 230.

The transmission/reception unit 220 (reception processing section 2212) may apply reception processing such as analog-to-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmission/reception unit 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control unit 210.

Note that the measurement section 223 may derive channel measurement for CSI computation, based on a channel measurement resource. The channel measurement resource may be, for example, a non-zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeable with a zero power (ZP) CSI-RS. Note that, in the present disclosure, CSI-RS, NZP CSI-RS, ZP CSI-RS, CSI-IM, CSI-SSB, and the like may be interchangeable with each other.

It is noted that the transmitting section and the reception unit of the user terminal 20 in the present disclosure may include at least one of the transmission/reception unit 220 and the transmission/reception antenna 230.

The transmission/reception unit 220 may receive a Radio Resource Control (RRC) configuration related to a cell whose physical range is changed. The control unit 210 may control the handover operation among the plurality of cells based on the RRC configuration (zeroth embodiment).

One physical cell identifier (PCI) related to a cell whose physical range is not changed may correspond to a cell whose physical range is changed (zeroth embodiment).

A plurality of physical cell identifiers (PCI) related to a cell whose physical range is not changed may correspond to a cell whose physical range is changed (zeroth embodiment).

The RRC configuration may include at least one of an identifier of a cell whose physical range is changed, an identifier of a cell whose physical range is not changed, an identifier of a serving cell, an index of a transmission and reception point, and an index of a reference signal (zeroth embodiment).

The transmission/reception unit 220 may receive trigger information regarding the handover. The control unit 210 may control at least one of uplink synchronization and downlink synchronization for a cell whose physical range is changed based on the trigger information (first/fourth embodiments).

The trigger information may be transmitted by using Radio Resource Control (RRC) reconfiguration (first embodiment).

The trigger information may be transmitted using a certain Medium Access Control (MAC) element (first embodiment).

The trigger information may be transmitted by using downlink control information (first embodiment).

The control unit 210 may determine whether to perform the operation related to the handover based on a trigger condition related to the handover to the cell whose physical range is changed. In a case where the handover operation is performed, the transmission/reception unit 220 may transmit a report on the handover (second embodiment).

The trigger condition may be configured by using radio resource control (RRC) reconfiguration (second embodiment).

The report on the handover may be transmitted using a certain Medium Access Control (MAC) element or uplink control information (second embodiment).

The operation related to the handover may be at least one of uplink synchronization and downlink synchronization with respect to the cell (fourth embodiment).

The transmission/reception unit 220 may receive a medium access control (MAC) element for activation of at least one of a first cell including a second cell whose physical range is changed and whose physical range is not changed, a group of the first cells, a transmission and reception point constituting the second cell, a synchronization signal transmitted in the second cell, and the second cell. The control unit 210 may determine at least one of the activation of the first cell, the activation of the group of the first cells, the activation of the transmission and reception point, the activation of the synchronization signal, and the activation of the second cell based on the MAC element (third embodiment).

The MAC element may indicate at least one of the activation of the first cell, the activation of the group of the first cells, the activation of the transmission and reception point, the activation of the synchronization signal, and the activation of the second cell in a bitmap format (third embodiment).

The MAC element may include at least one of an identifier of the first cell, an identifier of the group of the first cells, an identifier of the transmission and reception point, an index of the synchronization signal, and an identifier of the second cell (third embodiment).

In a case where the first cell is activated by the MAC element, the MAC element may include an identifier of the group of the first cells. In a case where transmission and reception point is activated by the MAC element, the MAC element may include an identifier of the group of the first cells and an identifier of the first cell. In a case where synchronization signal is activated by the MAC element, the MAC element may include an identifier of the group of the first cells, an identifier of the first cell, and an identifier of the transmission and reception point (third embodiment).

The transmission/reception unit 220 may receive a handover trigger indication based on the position information of the terminal or transmit a notification of triggering of the handover. The control unit 210 may control the operation of the handover based on the trigger indication or the notification (fifth embodiment).

The trigger indication may be transmitted based on position information of the terminal measured by a network or the terminal (fifth embodiment).

The notification may be transmitted to a cell before handover or a cell after handover (fifth embodiment).

The control unit 210 may control the operation of the handover according to the position information of the terminal based on one or more reference points and one or more conditions corresponding to the reference points (fifth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

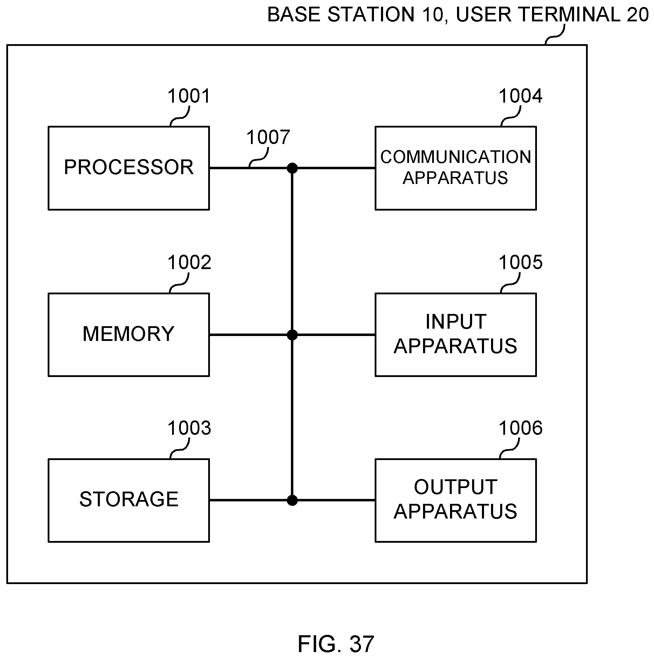

For example, a base station, a user terminal, and so on according to one embodiment of the present disclosure may function as a computer that executes the processes of the radio communication method of the present disclosure. FIG. 37 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

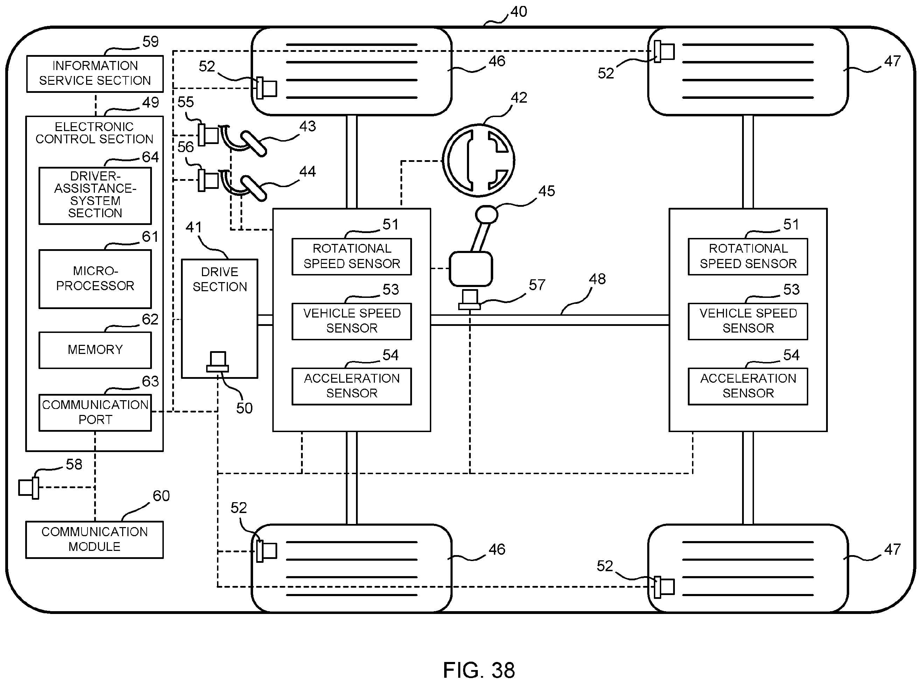

FIG. 38 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...". "Does not expect..." may be used interchangeably with "be not expected...". Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure.

## Claims

1. A terminal comprising:
a transmission/reception unit that receives a trigger indication of a handover based on position information of the terminal or transmits a notification of triggering of the handover; and
a control unit that controls an operation of the handover based on the trigger indication or the notification.

2. The terminal according to claim 1, wherein the trigger indication is transmitted based on position information of the terminal that is measured by a network or the terminal.

3. The terminal according to claim 1, wherein the notification is transmitted to a cell before handover or a cell after handover.

4. The terminal according to claim 1, wherein the control unit controls an operation of the handover according to position information of the terminal based on one or more reference points and one or more conditions corresponding to the reference points.

5. A radio communication method of a terminal, the method comprising:
a step of receiving a trigger indication of a handover based on position information of the terminal or transmitting a notification of triggering of the handover; and
a step of controlling an operation of the handover based on the trigger indication or the notification.

6. A base station comprising:
a transmission/reception unit that transmits a trigger indication of a handover based on position information of a terminal or receives a notification of triggering of the handover; and
a control unit that determines an operation of the handover based on the trigger indication or the notification.
